(19) Europäisches Patentamt
European Patent Office
Office européen des brevets

(11) EP 2 555 742 B2

(12) NEW EUROPEAN PATENT SPECIFICATION
After opposition procedure

(45) Date of publication and mention of the opposition decision:
05.12.2018 Bulletin 2018/49

(45) Mention of the grant of the patent:
16.03.2016 Bulletin 2016/11

(21) Application number: 11715122.5

(22) Date of filing: 05.04.2011

(51) Int Cl.:
*A61K 8/11* (2006.01) *B01J 2/00* (2006.01)
*B01J 13/06* (2006.01) *C11D 3/37* (2006.01)
*C11D 3/39* (2006.01) *C11D 17/00* (2006.01)
*B01J 13/02* (2006.01) *C11D 3/386* (2006.01)

(86) International application number:
PCT/US2011/031211

(87) International publication number:
WO 2011/127030 (13.10.2011 Gazette 2011/41)

# (54) ENCAPSULATES

VERKAPSELUNGEN

PRODUITS ENCAPSULÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:
23.07.2010 US 367098 P
10.06.2010 US 353393 P
26.05.2010 US 348450 P
06.04.2010 US 321323 P

(43) Date of publication of application:
13.02.2013 Bulletin 2013/07

(73) Proprietor: **The Procter & Gamble Company**
**Cincinnati, OH 45202 (US)**

(72) Inventors:
- **SMETS, Johan**
  **B-3210 Lubbeek (BE)**
- **FERNANDEZ PRIETO, Susana**
  **E-12578 Benicarlo-Castellon (ES)**
- **BOBNOCK, Robert, Stanley**
  **Menasha, Wisconsin 54952 (US)**
- **GUINEBRETIERE, Sandra, Jacqueline**
  **Appleton, Wisconsin 54913 (US)**
- **PERNEEL, Peter, Marie Kamiel**
  **B-8000 Brugge (BE)**
- **UYTTERSPROT, Jan-Sebastiaan**
  **B-1500 Halle (BE)**

(74) Representative: **Yorquez Ramirez, Maria Isabel**
**Procter & Gamble**
**Technical Centres Limited**
**Whitley Road**
**Longbenton**
**Newcastle upon Tyne NE12 9TS (GB)**

(56) References cited:
EP-A2- 0 484 081
EP-A2- 0 839 902
WO-A1-93/01269
WO-A1-03/042274
WO-A1-2005/012475
WO-A2-00/27519
WO-A2-01/49817
WO-A2-2006/053614
WO-A2-2010/013250
DE-A1- 4 321 205
DE-A1-102005 036 346
US-B1- 6 420 333

EP 2 555 742 B2

**Description**

FIELD OF INVENTION

The present application relates to products comprising encapsulates said encapsulates comprising solid, water soluble benefit agents, as well as processes for making and using such encapsulates.

BACKGROUND OF THE INVENTION

Products (*e.g.*, consumer products) may comprise one or more solid, water soluble benefit agent that can provide a desired benefit to such product and/or a situs that is contacted with such a product (*e.g.*, stain removal and/or bleaching). Unfortunately such benefit agents may be degraded by or degrade components of a product before such product is used. Thus, a protection system that protects the components of a product is desired. Protection systems include coating processes such as starch encapsulation and agglomeration. While such processes offer certain benefits, new protection processes that allow for triggered benefit agent release are desired. While melamine formaldehyde encapsulating technologies exist, Applicants recognized that such technologies do not allow the effective encapsulation of solid, water soluble benefit agents as such solid, water soluble benefit agents dissolve during the emulsification step of the encapsulation process. Furthermore, Applicants recognized that negative interactions between the benefit agent and shell materials that occur during particle making and processing can be eliminated or minimized by employing a protective suspension agent. In short, Applicants recognized the source of the problem and in the present specification disclose a solution to such problems as well as an effective encapsulation process that employs such solution. In addition, encapsulates made by such process and products comprising such encapsulates are disclosed.

SUMMARY OF THE INVENTION

The present application relates to products comprising encapsulates said encapsulates comprising solid, water soluble benefit agents, as well as processes for making and using such encapsulates. The encapsulation processes disclosed herein offer solutions to emulsification problems and minimize negative interactions between the benefit agent and shell materials that occur during particle making and processing, by employing a protective suspension agent.

DETAILED DESCRIPTION OF THE INTENTION

Definitions

As used herein "consumer product" means baby care, beauty care, fabric & home care, family care, feminine care, health care, snack and/or beverage products or devices generally intended to be used or consumed in the form in which it is sold. Such products include but are not limited to diapers, bibs, wipes; products for and/or methods relating to treating hair (human, dog, and/or cat), including, bleaching, coloring, dyeing, conditioning, shampooing, styling; deodorants and antiperspirants; personal cleansing; cosmetics; skin care including application of creams, lotions, and other topically applied products for consumer use including fine fragrances; and shaving products, products for and/or methods relating to treating fabrics, hard surfaces and any other surfaces in the area of fabric and home care, including: air care including air fresheners and scent delivery systems, car care, dishwashing, fabric conditioning (including softening and/or freshening), laundry detergency, laundry and rinse additive and/or care, hard surface cleaning and/or treatment including floor and toilet bowl cleaners, and other cleaning for consumer or institutional use; products and/or methods relating to bath tissue, facial tissue, paper handkerchiefs, and/or paper towels; tampons, feminine napkins; products and/or methods relating to oral care including toothpastes, tooth gels, tooth rinses, denture adhesives, tooth whitening; and over-the-counter health care.

As used herein, the term "cleaning and/or treatment composition" is a subset of consumer products that includes, unless otherwise indicated, beauty care, fabric & home care products. Such products include, but are not limited to, products for treating hair (human, dog, and/or cat), including, bleaching, coloring, dyeing, conditioning, shampooing, styling; deodorants and antiperspirants; personal cleansing; cosmetics; skin care including application of creams, lotions, and other topically applied products for consumer use including fine fragrances; and shaving products, products for treating fabrics, hard surfaces and any other surfaces in the area of fabric and home care, including: air care including air fresheners and scent delivery systems, car care, dishwashing, fabric conditioning (including softening and/or freshening), laundry detergency, laundry and rinse additive and/or care, hard surface cleaning and/or treatment including floor and toilet bowl cleaners, granular or powder-form all-purpose or "heavy-duty" washing agents, especially cleaning detergents; liquid, gel or paste-form all-purpose washing agents, especially the so-called heavy-duty liquid types; liquid fine-fabric detergents; hand dishwashing agents or light duty dishwashing agents, especially those of the high-foaming

type; machine dishwashing agents, including the various tablet, granular, liquid and rinse-aid types for household and institutional use; liquid cleaning and disinfecting agents, including antibacterial hand-wash types, cleaning bars, mouthwashes, denture cleaners, dentifrice, car or carpet shampoos, bathroom cleaners including toilet bowl cleaners; hair shampoos and hair-rinses; shower gels , fine fragrances and foam baths and metal cleaners; as well as cleaning auxiliaries such as bleach additives and "stain-stick" or pre-treat types, substrate-laden products such as dryer added sheets, dry and wetted wipes and pads, nonwoven substrates, and sponges; as well as sprays and mists all for consumer or/and institutional use; and/or methods relating to oral care including toothpastes, tooth gels, tooth rinses, denture adhesives, tooth whitening.

As used herein, the term "fabric and/or hard surface cleaning and/or treatment composition" is a subset of cleaning and treatment compositions that includes, unless otherwise indicated, granular or powder-form all-purpose or "heavy-duty" washing agents, especially cleaning detergents; liquid, gel or paste-form all-purpose washing agents, especially the so-called heavy-duty liquid types; liquid fine-fabric detergents; hand dishwashing agents or light duty dishwashing agents, especially those of the high-foaming type; machine dishwashing agents, including the various tablet, granular, liquid and rinse-aid types for household and institutional use; liquid cleaning and disinfecting agents, including antibacterial hand-wash types, cleaning bars, car or carpet shampoos, bathroom cleaners including toilet bowl cleaners; and metal cleaners, fabric conditioning products including softening and/or freshening that may be in liquid, solid and/or dryer sheet form ; as well as cleaning auxiliaries such as bleach additives and "stain-stick" or pre-treat types, substrate-laden products such as dryer added sheets, dry and wetted wipes and pads, nonwoven substrates, and sponges; as well as sprays and mists. All of such products which are applicable may be in standard, concentrated or even highly concentrated form even to the extent that such products may in certain aspect be non-aqueous.

As used herein, the terms "particle" and "encapsulate" are synonymous.

As used herein, articles such as "a" and "an" when used in a claim, are understood to mean one or more of what is claimed or described.

As used herein, the terms "include", "includes" and "including" are meant to be non-limiting.

As used herein, the term "solid" includes granular, powder, bar and tablet product forms.

As used herein, the term "fluid" includes liquid, gel, paste and gas product forms.

As used herein, the term "situs" includes paper products, fabrics, garments, hard surfaces, hair and skin.

Unless otherwise noted, all component or composition levels are in reference to the active portion of that component or composition, and are exclusive of impurities, for example, residual solvents or by-products, which may be present in commercially available sources of such components or compositions.

All percentages and ratios are calculated by weight unless otherwise indicated. All percentages and ratios are calculated based on the total composition unless otherwise indicated.

It should be understood that every maximum numerical limitation given throughout this specification includes every lower numerical limitation, as if such lower numerical limitations were expressly written herein. Every minimum numerical limitation given throughout this specification will include every higher numerical limitation, as if such higher numerical limitations were expressly written herein. Every numerical range given throughout this specification will include every narrower numerical range that falls within such broader numerical range, as if such narrower numerical ranges were all expressly written herein.

## Particle

In one aspect, a particle comprising:

a) a shell material said shell material that may comprise a material selected from:

(i) a material that may comprise polyvinyl pyrrolidone. In one aspect such material may comprise polyvinyl pyrrolidone, polyvinyl pyrrolidone styrene copolymers, polyvinyl pyrrolidone vinyl acetate copolymers, polyvinyl pyrrolidone imidazole copolymers and mixtures thereof;

(ii) polymers derived from hydrophilic monomers that may comprise diamines, triamines, diols and mixtures thereof. In one aspect such di- and triamines may comprise diethylene triamine, hexamethylene diamine, ethylene diamine and mixtures thereof. In one aspect such diol may comprise ethyleneglycol, 1,2-propanediol, 1,3-propanediol, 1-proper-1,3-diol, 1,4-butanediol, 1,3-butanodiol, 1,2-butanediol, 3-butene-1,2-diol, 3-butene-1,4-diol, 1,5-pentanediol, 1-penten-1,5-diol, 1,6-hexanediol, 3,4-dihydroxy-3-cyclobutene-1,2-dione, 5-hydroxy-2-(hydroxymethyl)-4H-pyran-4-one, (2*E*)-2,3-dihydroxy-2-butenedioic acid hydrate, 2,3,5,6-tetrahydroxybenzo-1,4-quinone, 4,4-dimethyl-1,2-cyclopentanediol, 3-methyl-1,3,5-pentanetriol, 3-methyl-1,5-pentanediol, (1*S*,2*S*)-1,2-cyclopentanediol, 1,3-cyclohexanediol, 1,5-hexanediol, 1,2,6-hexanetriol, 1,2,4-butanetriol and mixtures thereof;

(iii) polymers derived from hydrophobic monomers that may comprise diacyl chlorides, diisocyanates, bischloroformates and mixtures thereof. In one aspect such diacyl chlorides may comprise trimesoyl chloride, teraphthaloyl chloride, acetyl chloride, benzoyl chloride and mixtures thereof. In one aspect such diisocyanate may comprise 1-isocianato-4-[(4-fenilisocianato)metil]benzene, 2,4-diisocyanato-1-methyl-benzene, 1,6-diisocyanatohexane, 5-isocyanato-1-(isocyanatomethyl)-1,3,3-trimethylcyclohexane; in one aspect such bischloroformates may comprise bisphenol A bis(chloroformate), bisphenol Z bis(chloroformate) and mixtures thereof;

(iv) a material that may comprise polyvinyl alcohol derivative. In one aspect such material may comprise polyvinyl alcohol, polyvinyl alcohol 2-acrylamide-2-methylpropane sulfonate copolymers, copolymers of polyvinyl alcohol derived from monomers that may comprise primary and secondary amine, polyvinyl alcohol imidazoles copolymers and mixtures thereof. In another aspect such material may be cross-linked with gluteraldehyde, sodium tetraborate, ethyl acetate and mixtures thereof. In one aspect, the material may comprise a mixture of a polyvinyl alcohol derivative and a crosslinked polyvinyl alcohol derivative;

(v) a material that may comprise an acrylate derivative. In one aspect such material may comprise methyl acrylate; maleic anhydride; polyvinyl alcohol- methyl acrylate; polyacrylamides; polyacrylic acids and mixtures thereof;

(vii) a material that may comprise a cellulosic polymer. In one aspect, such material may comprise starch, xanthan gum, cellulose acetate, cellulose acetate phthalate, hydroxyl propyl methyl cellulose, methyl cellulose, ethyl cellulose, hydroxypropyl methylcellulose phthalate and mixtures thereof. In one aspect, such starch may comprise a octenyl succinated starch, a hydroxyethylated starch, a hydroxypropylated starch and mixtures thereof;

b) and a core material, said core material comprises, a protective suspension agent, a solid, water soluble benefit agent and an optional hydrophobic organic material;

said shell material encapsulating said core material, is disclosed.

In one aspect, a particle comprising:

a) a shell material said shell material that may comprise a material selected from:

(i) a material that may comprise polyvinyl pyrrolidone. In one aspect such material may comprise polyvinyl pyrrolidone, polyvinyl pyrrolidone styrene copolymers, polyvinyl pyrrolidone vinyl acetate copolymers, polyvinyl pyrrolidone imidazole copolymers and mixtures thereof;

(ii) polymers derived from hydrophilic monomers that may comprise diamines, triamines, diols and mixtures thereof. In one aspect such di- and triamines may comprise diethylene triamine, hexamethylene diamine, ethylene diamine and mixtures thereof. In one aspect such diol may comprise ethylene glycol, 1,2-propanediol, 1,3-propanediol, 1-propen-1,3-diol, 1,4-butanediol, 1,3-butanodiol, 1,2-butanediol, 3-butene-1,2-diol, 3-butene-1,4-diol, 1,5-pentanediol, 1-penten-1,5-diol, 1,6-hexanediol, 3,4-dihydroxy-3-cyclobutene-1,2-dione, 5-hydroxy-2-(hydroxymethyl)-4H-pyran-4-one, (2*E*)-2,3-dihydroxy-2-butenedioic acid hydrate, 2,3,5,6-tetrahydroxybenzo-1,4-quinone, 4,4-dimethyl-1,2-cyclopentanediol, 3-methyl-1,3,5-pentanetriol, 3-methyl-1,5-pentanediol, (1*S*,2*S*)-1,2-cyclopentanediol, 1,3-cyclohexanediol, 1,5-hexanediol, 1,2,6-hexanetriol, 1,2,4-butanetriol and mixtures thereof;

(iii) polymers derived from hydrophobic monomers that may comprise diacyl chlorides, bischloroformates and mixtures thereof. In one aspect such diacyl chlorides may comprise trimesoyl chloride, teraphthaloyl chloride, acetyl chloride, benzoyl chloride and mixtures thereof. In one aspect such bischloroformates may comprise bisphenol A bis(chloroformate), bisphenol Z bis(chloroformate) and mixtures thereof;

(iv) a material that may comprise a cellulosic polymer. In one aspect, such material may comprise starch, xanthan gum, cellulose acetate, cellulose acetate phthalate, hydroxyl propyl methyl cellulose, methyl cellulose, ethyl cellulose, hydroxypropyl methylcehulose phthalate and mixtures thereof. In one aspect, such starch may comprise a octenyl succinated starch, a hydroxyethylated starch, a hydroxypropylated starch and mixtures thereof;

b) and a core material, said core material comprises, a protective suspension agent, a solid, water soluble benefit agent and an optional hydrophobic organic material;

said shell material encapsulating said core material, is disclosed.

In one aspect, a particle comprising:

a) a shell material said shell material that may comprise a material selected from:

(i) polymers derived from hydrophilic monomers that may comprise diamines, triamines, diols and mixtures thereof. In one aspect such di- and triamines may comprise diethylene triamine, hexamethylene diamine, ethylene diamine and mixtures thereof. In one aspect such diol may comprise ethylene glycol, 1,2-propanediol, 1,3-propanediol, 1-propen-1,3-diol, 1,4-butanediol, 1,3-butanodiol, 1,2-butanediol, 3-butene-1,2-diol, 3-butene-1,4-diol, 1,5-pentanediol, 1-penten-1,5-diol, 1,6-hexanediol, 3,4-dihydroxy-3-cyclobutene-1,2-dione, 5-hydroxy-2-(hydroxymethyl)-4H-pyran-4-one, (2*E*)-2,3-dihydroxy-2-butenedioic acid hydrate, 2,3,5,6-tetrahydroxybenzo-1,4-quinone, 4,4-dimethyl-1,2-cyclopentanediol, 3-methyl-1,3,5-pentanetriol, 3-methyl-1,5-pentanediol, (1*S*,2*S*)-1,2-cyclopentanediol, 1,3-cyclohexanediol, 1,5-hexanediol, 1,2,6-hexanetriol, 1,2,4-butanetriol and mixtures thereof;

(ii) polymers derived from hydrophobic monomers that may comprise diisocyanates. In one aspect such diisocyanate may comprise 1-isocianato-4-[(4-fenilisocianato)metil]benzene, 2,4-diisocyanato-1-methyl-benzene, 1,6-diisocyanatohexane, 5-isocyanato-1-(isocyanatomethyl)-1,3,3-trimethyl-cyclohexane;

(iii) a material that may comprise polyvinyl alcohol derivative. In one aspect such material may comprise polyvinyl alcohol, polyvinyl alcohol 2-acrylamide-2-methylpropane sulfonate copolymers, copolymers of polyvinyl alcohol derived from monomers that may comprise primary and secondary amine, polyvinyl alcohol imidazoles copolymers and mixtures thereof. In another aspect such material may be cross-linked with gluteraldehyde, sodium tetraborate, ethyl acetate and mixtures thereof. In one aspect, the material may comprise a mixture of a polyvinyl alcohol derivative and a crosslinked polyvinyl alcohol derivative;

(iv) a material that may comprise an acrylate derivative. In one aspect such material may comprise methyl acrylate; maleic anhydride; polyvinyl alcohol- methyl acrylate; polyacrylamides; polyacrylic acids and mixtures thereof;

b) and a core material, said core material comprises, a protective suspension agent, a solid, water soluble benefit agent and an optional hydrophobic organic material;

said shell material encapsulating said core material, is disclosed.

In one aspect of said particle, said water soluble benefit agent may have a water solubility of at least 10 g/liter, from about 1 mg/liter to about 800 g/liter, from about 1 g/liter to about 600 g/liter, from about 100 g/liter to about 500 g/liter or even from about 150 g/liter to about 400 g/liter.

In one aspect, the particle's shell may comprise bleach reactive monomers in addition the specific bleach reactive monomers that were previously disclosed.

In one aspect, said shell may comprise one or more layers for example, 2, 3, 4, 5, or 6, layers.

<u>Consumer Product Comprising Particle</u>

In one aspect, a consumer product comprising a particle, said particle comprising:

a) a shell material said shell material that may comprise a material selected from:

(i) a material that may comprise polyvinyl pyrrolidone. In one aspect such material may comprise polyvinyl pyrrolidone, polyvinyl pyrrolidone styrene copolymers, polyvinyl pyrrolidone vinyl acetate copolymers, polyvinylpyrrolidone imidazole copolymers and mixtures thereof;

(ii) polymers derived from hydrophilic monomers that may comprise diamines, triamines, diols and mixtures thereof. In one aspect such di- and triamines may comprise diethylene triamine, hexamethylene diamine, ethylene diamine and mixtures thereof. In one aspect such diol may comprise ethylene glycol, 1,2-propanediol, 1,3-propanediol, 1-propen-1,3-diol, 1,4-butanediol, 1,3-butanodiol, 1,2-butanediol, 3-butene-1,2-diol, 3-butene-1,4-diol, 1,5-pentanediol, 1-penten-1,5-diol, 1,6-hexanediol, 3,4-dihydroxy-3-cyclobutene-1,2-dione, 5-hydroxy-2-(hydroxymethyl)-4H-pyran-4-one, (2*E*)-2,3-dihydroxy-2-butenedioic acid hydrate, 2,3,5,6-tetrahydroxybenzo-1,4-quinone, 4,4-dimethyl-1,2-cyclopentanediol, 3-methyl-1,3,5-pentanetriol, 3-methyl-1,5-pentanediol, (1*S*,2*S*)-1,2-cyclopentanediol, 1,3-cyclohexanediol, 1,5-hexanediol, 1,2,6-hexanetriol, 1,2,4-butanetriol and mixtures thereof;

(iii) polymers derived from hydrophobic monomers that may comprise diacyl chlorides, diisocyanates, bischloroformates and mixtures thereof. In one aspect such diacyl chlorides may comprise trimesoyl chloride, teraphthaloyl chloride, acetyl chloride, benzoyl chloride and mixtures thereof. In one aspect such diisocyanate may comprise 1-isocianato-4-[(4-fenilisocianato)metil]benzene, 2,4-diisocyanato-1-methyl-benzene, 1,6-diisocyanatohexane, 5-isocyanalo-1-(isocyanalomethyl)-1,3,3-trimethyl-cyclohexane; in one aspect such bischloroformates may comprise bisphenol A bis(chloroformate), bisphenol Z bis(chloroformate) and mixtures thereof;

(iv) a material that may comprise polyvinyl alcohol derivative. In one aspect such material may comprise polyvinyl

alcohol, polyvinyl alcohol 2-acrylamide-2-methylpropane sulfonate copolymers, copolymers of polyvinyl alcohol derived from monomers that may comprise primary and secondary amine, polyvinyl alcohol imidazoles copolymers and mixtures thereof. In another aspect such material may be cross-linked with gluteraldehyde, sodium tetraborate, ethyl acetate and mixtures thereof. In one aspect, the material may comprise a mixture of a polyvinyl alcohol derivative and a crosslinked polyvinyl alcohol derivative;

(v) a material that may comprise an acrylate derivative. In one aspect such material may comprise methyl acrylate; maleic anhydride; polyvinyl alcohol- methyl acrylate; polyacrylamides; polyacrylic acids and mixtures thereof;

(vii) a material that may comprise a cellulosic polymer. In one aspect, such material may comprise starch, xanthan gum, cellulose acetate, cellulose acetate phthalate, hydroxyl propyl methyl cellulose, methyl cellulose, ethyl cellulose, hydroxypropyl methylcellulose phthalate and mixtures thereof. In one aspect, such starch may comprise a octenyl succinated starch, a hydroxyethylated starch, a hydroxypropylated starch and mixtures thereof;

b) and a core material, said core material comprises, a protective suspension agent, a solid, water soluble benefit agent and an optional hydrophobic organic material;

said shell material encapsulating said core material, is disclosed.

In one aspect, a consumer product that comprises one or more species of particle disclosed above is disclosed. In one aspect, said particles' core material may comprise, based total core weight, from about 0.01% to about 80%, from about 0.1% to about 50%, from about 1% to about 25% or from about 1% to about 10% of said solid, water soluble benefit agent.

In one aspect of said consumer product, said water soluble benefit agent may have a water solubility of at least 10 g/liter, from about 1 mg/liter to about 800 g/liter, from about 1 g/liter to about 600 g/liter, from about 100 g/liter to about 500 g/liter or even from about 150 g/liter to about 400 g/liter.

In one aspect of said particle, said solid, water soluble benefit agent needs to be micronized at a particle size below the particle size of the capsule. In one embodiment, 50%, 75%, 90% or even 99% of said micronized solid, water soluble benefit agent has a particle size below 80 microns, below 50 microns, below 20 microns, below 8 microns or even below 5 microns. In one embodiment, the solid, water soluble benefit agent, is micronized by a grinding process.

In one aspect, a consumer product, that may comprise one or more species of particle disclosed above, wherein said particles' core material may comprise, based total core weight, from about 0.1 % to about 99%, from about 1% to about 95%, from about 1% to about 80% or from about 5% to about 50% of said protective suspension agent, is disclosed.

In one aspect, a consumer product, that may comprise one or more species of particle disclosed above, wherein said particles' core material may comprise, based total core weight, from about 0.1% to about 99%, from about 1% to about 95%, from about 1% to about 80% or from about 5% to about 80% of said hydrophobic organic material, is disclosed.

- In one aspect, a consumer product, that may comprise one or more species of particle disclosed above, wherein said particles' core material may comprise, based total particle weight, from about 1% to about 95%, from about 1% to about 95%, from about 5% to about 80% or from about 5% to about 50% of said core material, is disclosed.

In one aspect, a consumer product, that may comprise one or more species of particle disclosed above, wherein said particles' core material may comprise, based total consumer product weight, from about 0.01% to about 80%, from about 0.1% to about 50%, from about 1% to about 25% or from about 1% to about 10% of said particle, is disclosed.

In one aspect, a consumer product, that may comprise one or more species of particle disclosed above, wherein said particles' core material may comprise a solid, water soluble benefit agent that may comprise a material selected from the group consisting of a metal catalyst, a non-metal catalyst, an activator, a pre-formed peroxy carboxylic acid, a diacyl peroxide, a hydrogen peroxide source, an enzyme and mixtures thereof, is disclosed.

In one aspect, a consumer product, that comprises one or more species of particle disclosed above, wherein said particles' core material may comprise a solid, water soluble benefit agent that may comprise:

a) a metal catalyst that may comprise a material selected from the group consisting of dichloro-1,4-diethyl-1,4,8,11-tetraazabicyclo[6.6.2]hexadecane manganese(II); dichloro-1,4-dimethyl-1,4,8,11-tetraazabicyclo[6.6.2]hexadecane manganese(II) and mixtures thereof;

b) a non- metal catalyst that may comprise material selected from the group consisting of 2-[3-[(2-hexyldodecyl)oxy]-2-(sulfooxy)propyl]-3,4-dihydroisoquinolinium, inner salt; 3,4-dihydro-2-[3-[(2-pentylundecyl)oxy]-2-(sulfooxy)propyl]isoquinolinium, inner salt; 2-[3-[(2-butyldecyl)oxy]-2-(sulfooxy)propyl]-3,4-dihydroisoquinolinium, inner salt; 3,4-dihydro-2-[3-(octadecyloxy)-2-(sulfooxy)propyl]isoquinolinium, inner salt; 2-[3-(hexadecyloxy)-2-(sulfooxy)propyl]-3,4-dihydroisoquinolinium, inner salt; 3,4-dihydro-2-[2-(sulfooxy)-3-(tetradecyloxy)propyl]isoquinolinium, inner salt;

2-[3-(dodecyloxy)-2-(sulfooxy)propyl]-3,4-dihydroisoquinolinium, inner salt; 2-[3-[(3-hexyldecyl)oxy]-2-(sulfooxy)propyl]-3,4-dihydroisoquinolinium, inner salt; 3,4-dihydro-2-[3-[(2-pentylnonyl)oxy]-2-(sulfooxy)propyl]isoquinolinium, inner salt; 3,4-dihydro-2-[3-[(2-propylheptyl)oxy]-2-(sulfooxy)propyl]isoquinolinium, inner salt; 2-[3-[(2-butyloctyl)oxy]-2-(sulfooxy)propyl]-3,4-dihydroisoquinolinium, inner salt; 2-[3-(decyloxy)-2-(sulfooxy)propyl]-3,4-dihydroisoquinolinium, inner salt; 3,4-dihydro-2-[3-(octyloxy)-2-(sulfooxy)propyl]isoquinolinium, inner salt; 2-[3-[(2-ethylhexyl)oxy]-2-(sulfooxy)propyl]-3,4-dihydroisoquinolinium, inner salt and mixtures thereof;

c) an activator that may comprise a material selected from the group consisting of tetraacetyl ethylene diamine (TAED); benzoylcaprolactam (BzCL); 4-nitrobenzoylcaprolactam; 3-chlorobenzoylcaprolactam; benzoyloxybenzenesulphonate (BOBS); nonanoyloxybenzene¬sulphonate (NOBS); phenyl benzoate (PhBz); decanoyloxybenzenesulphonate ($C_{10}$-OBS); benzoylvalerolactam (BZVL); octanoyloxybenzenesulphonate ($C_8$-OBS); perhydrolyzable esters; 4-[N-(nonaoyl) amino hexanoyloxy]-benzene sulfonate sodium salt (NACA-OBS); dodecanoyloxybenzenesulphonate (LOBS or $C_{12}$-OBS); 10-undecenoyloxybenzenesulfonate (UDOBS or $C_{11}$-OBS with unsaturation in the 10 position); decanoyloxybenzoic acid (DOBA); (6-oclanamidocaproyl)oxybenzenesulfonate; (6-nonanamidocaproyl) oxybenzenesulfonate; (6-decanamidocaproyl)oxybenzenesulfonate and mixtures thereof;

d) a preformed peracid that may comprise a material selected from the group consisting of peroxymonosulfuric acids; perimidic acids; percabonic acids; percarboxilic acids and salts of said acids; amidoperoxyacids and mixtures thereof, in one aspect said percarboxilic acids and salts thereof may comprise phthalimidoperoxyhexanoic acid, 1,12-diperoxydodecanedioic acid; monoperoxyphthalic acid (magnesium salt hexahydrate) and mixtures thereof, in one aspect, said amidoperoxyacids may comprise N,N'-terephthaloyl-di(6-aminocaproic acid), a monononylamide of either peroxysuccinic acid (NAPSA) or of peroxyadipic acid (NAPAA), N-nonanoylaminoperoxycaproic acid (NAPCA), and mixtures thereof; in one aspect, said preformed peracid may comprise phthalimidoperoxyhexanoic acid;

e) a diacyl peroxide that may comprise a material selected from the group consisting of dinonanoyl peroxide, didecanoyl peroxide, diundecanoyl peroxide, dilauroyl peroxide, dibenzoyl peroxide, di-(3,5,5-trimethyl hexanoyl) peroxide and mixtures thereof; in one aspect, said diacyl peroxide may be, clatharated;

f) a hydrogen peroxide source that may comprise a material selected from the group consisting of a perborate, a percarbonate a peroxyhydrate, a peroxide, a persulfate and mixtures thereof, in one aspect said hydrogen peroxide source may comprise sodium perborate, in one aspect said sodium perforate may comprise a mono- or tetra-hydrate, sodium pyrophosphate peroxyhydrate, urea peroxyhydrate, trisodium phosphate peroxyhydrate, sodium peroxide and mixtures thereof; and

g) an enzyme that may comprise a material selected from the group consisting of peroxidases, proteases, lipases, phospholipases, cellobiohydrolases, cellobiose dehydrogenases, esterases, cutinases, pectinases, mannanases, pectate lyases, keratinases, reductases, oxidases, phenoloxidases, lipoxygenases, ligninases, pullulanases, tannases, pentosanases, glucanases, arabinosidases, hyaluronidase, chondroitinase, laccases, amylases, and mixtures thereof;

h) and mixtures thereof, is disclosed.

In one aspect, a consumer product, that comprises one or more species of particle disclosed above, wherein said particles' core material comprises a protective suspension agent that comprises an organosilicone said organosilicone being linear, branched and/or crosslinked and having a viscosity at 25°C of from about 500 centistokes to about 2,000,000 centistokes, from about 1000 centistokes to about 800,000 centistokes or even from about 1000 centistokes to about 300,000 centistokes, is disclosed.

In one aspect, the protective suspension agent may comprise:

| centiStokes (*cSt*) | Typical liquid |
|---|---|
| 1000 | Silicone DC 200 Fluid* |
| 12,500 | Silicone DC 200 Fluid* |
| 60,000 | Silicone, polysiloxane, Dow Corning DC 200 |
| *silicone DC200 Fluid is available in a range of viscosities under the tradename DC200 Fluid. Other silicones that are useful as hydrophobic organic materials and that are available from Dow Corning, Midland, MI, include silicone DC 245 Fluid and silicone DC 246 Fluid. | |

In one aspect, the protective suspension agent may have a viscosity of at least 500 centistokes. For purposes of the invention, the protective suspension agent could be blended with differing viscosity materials such as silicone 60,000 centistokes (cSt) and silicone 100 cSt to achieve a resultant viscosity of at least 500 centistokes. Such blends with resultant viscosities of at least 500 cSt are intended as encompassed by the phrase "the protective agent has a

viscosity of at least 500 cSt".

In one aspect, a consumer product, that may comprise one or more species of particle disclosed above, wherein said particles' core material comprises, an organosilicone that may comprise a material selected from the group consisting of non-functionalized siloxane polymers, functionalized siloxane polymers and mixtures thereof, is disclosed.

In one aspect, a consumer product, that may comprise one or more species of particle disclosed above, wherein said particles' core material may comprise a functionalized siloxane polymer that may comprise an aminosilicone, is disclosed.

Organosilicones that may be suitable for use in the disclosed consumer product include organosilicones that may comprise Si-O moieties. Such organosilicones may be selected from (a) non-functionalized siloxane polymers, (b) functionalized siloxane polymers, and combinations thereof. The molecular weight of the organosilicone is usually indicated by the reference to the viscosity of the material. In one aspect, the organosilicones may comprise a viscosity of from about 10 to about 2,000,000 centistokes at 25°C. In one aspect, suitable organosilicones may have a viscosity of from about 10 to about 800,000 centistokes at 25°C.

Suitable organosilicones may be linear, branched or cross-linked. In one aspect, the organosilicones may be linear.

In one aspect, the organosilicone may comprise a non-functionalized siloxane polymer that may have Formula I below, and may comprise polyalkyl and/or phenyl silicone fluids, resins and/or gums.

$$[R_1R_2R_3SiO_{1/2}]_n[R_4R_4SiO_{2/2}]_m[R_4SiO_{3/2}]_j \qquad \text{(Formula I)}$$

wherein:

i) each $R_1$, $R_2$, $R_3$ and $R_4$ may be independently selected from the group consisting of H, -OH, $C_1$-$C_{20}$ alkyl, $C_1$-$C_{20}$ substituted alkyl, $C_6$-$C_{20}$ aryl, $C_6$-$C_{20}$ substituted aryl, alkylaryl, and/or $C_1$-$C_{20}$ alkoxy, moieties;

ii) n may be an integer from about 2 to about 10, or from about 2 to about 6; or 2; such that n = j+2;

iii) m may be an integer from about 5 to about 8,000, from about 7 to about 8,000 or from about 15 to about 4,000;

iv) j may be an integer from about 0 to about 10, or from about 0 to about 4, or 0;

In one aspect, $R_2$, $R_3$ and $R_4$ may comprise methyl, ethyl, propyl, $C_4$-$C_{20}$ alkyl, and/or $C_6$-$C_{20}$ aryl moieties. In one aspect, each of $R_2$, $R_3$ and $R_4$ may be methyl. Each $R_1$ moiety blocking the ends of the silicone chain may comprise a moiety selected from the group consisting of hydrogen, methyl, methoxy, ethoxy, hydroxy, propoxy, and/or aryloxy.

As used herein, the nomenclature SiO"n"/2 represents the ratio of oxygen and silicon atoms. For example, $SiO_{1/2}$ means that one oxygen is shared between two Si atoms. Likewise $SiO_{2/2}$ means that two oxygen atoms are shared between two Si atoms and $SiO_{3/2}$ means that three oxygen atoms are shared are shared between two Si atoms.

In one aspect, the organosilicone may be polydimethylsiloxane, dimethicone, dimethiconol, dimethicone crosspolymer, phenyl trimethicone, alkyl dimethicone, lauryl dimethicone, stearyl dimethicone and phenyl dimethicone. Examples include those available under the trade names DC 200 Fluid, DC 1664, DC 349, DC 346G available from offered by Dow Corning Corporation, Midland, MI, and those available under the trade names SF1202, SF1204, SF96, and Viscasil® available from Momentive Silicones, Waterford, NY.

In one aspect, the organosilicone may comprise a cyclic silicone. The cyclic silicone may comprise a cyclomethicone of the formula $[(CH_3)_2SiO]_n$ where n is an integer that may range from about 3 to about 7, or from about 5 to about 6.

In one aspect, the organosilicone may comprise a functionalized siloxane polymer. Functionalized siloxane polymers may comprise one or more functional moieties selected from the group consisting of amino, amido, alkoxy, hydroxy, polyether, carboxy, hydride, mercapto, sulfate phosphate, and/or quaternary ammonium moieties. These moieties may be attached directly to the siloxane backbone through a bivalent alkylene radical, (i.e., "pendant") or may be part of the backbone. Suitable functionalized siloxane polymers include materials selected from the group consisting of aminosilicones, amidosilicones, silicone polyethers, silicone-urethane polymers, quaternary ABn silicones, amino ABn silicones, and combinations thereof.

In one aspect, the functionalized siloxane polymer may comprise a silicone polyether, also referred to as "dimethicone copolyol." In general, silicone polyethers comprise a polydimethylsiloxane backbone with one or more polyoxyalkylene chains. The polyoxyalkylene moieties may be incorporated in the polymer as pendent chains or as terminal blocks. Such silicones are described in USPA 2005/0098759 A1, and USPNs 4,818,421 and 3,299,112. Exemplary commercially available silicone polyethers include DC 190, DC 193, FF400, all available from Dow Corning Corporation, and various Silwet surfactants available from Momentive Silicones.

In one aspect, the functionalized siloxane polymer may comprise an aminosilicone. Suitable aminosilicones are described in USPNs 7,335,630 B2, 4,911,852, and USPA 2005/0170994 A1. In one aspect, the anunosilicone may comprise the structure of Formula II:

$$[R_1R_2R_3SiO_{1/2}]_n[(R_4Si(X\text{-}Z)O_{2/2}]_k[R_4R_4SiO_{2/2}]_m[R_4SiO_{3/2}]_j \qquad \text{(Formula II)}$$

wherein

i. $R_1$, $R_2$, $R_3$ and $R_4$ may each be independently selected from H, OH, $C_1$-$C_{20}$ alkyl, $C_1$-$C_{20}$ substituted alkyl, $C_6$-$C_{20}$ aryl, $C_6$-$C_{20}$ substituted aryl, alkylaryl, and/or $C_1$-$C_{20}$ alkoxy;

ii. Each X may be independently selected from a divalent alkylene radical comprising 2-12 carbon atoms, $-(CH_2)s-$ wherein s may be an integer from about 2 to about 10;$-CH_2-CH(OH)-CH_2-$; and/or

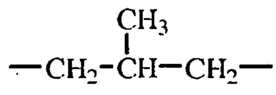 ;

iii. Each Z may be independently selected from$-N(R_5)_2$; $-N(R_5)_3A^-$,

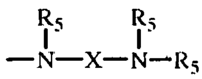

or

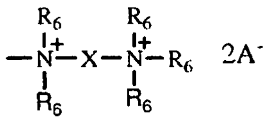

and/or

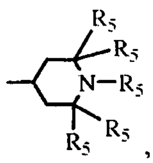 ,

wherein each $R_5$ may be selected independently selected from H, $C_1$-$C_{20}$ alkyl, $C_1$-$C_{20}$ substituted alkyl, $C_6$-$C_{20}$ aryl, $C_6$-$C_{20}$ and/or substituted aryl, each $R_6$ may be independently selected from H, OH, $C_1$-$C_{20}$ alkyl, $C_1$-$C_{20}$ substituted alkyl, $C_6$-$C_{20}$ aryl, $C_6$-$C_{20}$ substituted aryl, alkylaryl, and/or $C_1$-$C_{20}$ alkoxy; and $A^-$ may be a compatible anion. In one aspect, A- may be a halide;

iv. k may be an integer from about 3 to about 20, or from about 5 to about 18 more or from about 5 to about 10;

v. m may be an integer from about 100 to about 2,000, or from about 150 to about 1,000;

vi. n may be an integer from about 2 to about 10, or about 2 to about 6, or 2, such that n = j+2; and

vii. j may be an integer from about 0 to about 10, or from about 0 to about 4, or 0;

In one aspect, $R_1$ may comprise -OH. In this aspect, the organosilicone may be amodimethicone.

Exemplary commercially available aminosilicones include DC 8822, 2-8177, and DC-949, available from Dow Corning Corporation, and KF-873, available from Shin-Etsu Silicones, Akron, OH.

In one aspect, the organosilicone may comprise amine ABn silicones and quat ABn silicones. Such organosilicones are generally produced by reacting a diamine with an epoxide. These are described, for example, in USPNs 6,903,061 B2, 5,981,681, 5,807,956, 6,903,061 B2 and 7,273,837 B2. These are commercially available under the trade names Magnasoft® Prime, Magnasoft® JSS, Silsoft® A-858 (all from Momentive Silicones).

In one aspect, the functionalized siloxane polymer may comprise silicone-urethanes, such as those described in USPA Serial No.61/170,150. These are commercially available from Wacker Silicones under the trade name SLM-21200.

When a sample of organosilicone is analyzed, it is recognized by the skilled artisan that such sample may have, on average, non-integer indices for Formula I and II above, but that such average indice values will be within the ranges

of the indices for Formula I and II above.

In one aspect, a consumer product, that may comprise one or more species of particle disclosed above, wherein said particles' core material may comprise a hydrophobic organic material that may comprise a material having a ClogP from about 1.5 to about 10, from about 1.5 to about 6, from about 2 to about 5 or even from about 2.2 to about 4.5, is disclosed.

In one aspect, a consumer product, that may comprise one or more species of particle disclosed above, wherein said particles' core material may comprise a hydrophobic organic material that may comprise a material selected from the group consisting of an aliphatic hydrophobic organic material; an aromatic hydrophobic organic material and mixtures thereof, is disclosed.

In one aspect, a consumer product, that may comprise one or more species of particle disclosed above, wherein said particles' core material may comprise a hydrophobic organic material that may comprise a material selected from the group consisting of a carboxylic acid, an ester, an alcohol, a fatty acid, a natural oil, a synthetic oil, an aldehyde, a ketone, a nitrile, a hydrocarbon, an ether, an acetal, a Schiff Base, a wax and mixtures thereof, is disclosed.

In one aspect, a consumer product that may comprise one or more species of particle disclosed above, wherein said particles' core material may comprise:

i. an alcohol that may comprise a material selected from Lauryl alcohol, Citronellol, Alpha-terpineol, 2-tert-butylcyclohexanol, 2,6-dimethyl-2-octanol, 3,7-dimethyl-3-octanol and 2,6-dimethyl-2-octanol, 2-methyl-4-(2,2,3-trimethyl-3-cyclopentenyl)-2-buten-l-ol, linalool, Tetrahydrolinalool and mixtures thereof;

ii. an ester that may comprise a material selected from Methyl laurate, Methyl jasmonate, Hexyl isovalerate, Geranyl acetate, 1,4-dioxacyclohexadecane-5,16-dione, 4-tert-butylcyclohexyl acetate, 3,5,5-trimethylhexyl acetate, Ethyl-2-methylpentanoate, Ethyl Methyl-2-Butyrate, Isopropyl myristate and mixtures thereof;

iii. an ether that may comprise a material selected from (3z)-1-[(2-methyl-2-propenyl)oxy]-3-hexene, decahydrospiro[furan-2(3h),5'-[4.7]methano[5h[indene], 4,9,12,12-tetramethyl-5-oxatricyclo[8.2.0.0(4,6)]dodecane, decahydro-2,6,6,7,8,8-hexamethyl-2h-indeno[4,5-b]furan, isomers of decahydro-2,6,6,7,8,8-hexamethyl-2h-indeno[4,5-b]furan, 2-(1-ethylpentyl)-1,3-dioxolane, 2-methyl-1,5-dioxaspiro[5.5]undecane, phenyl ethyl cyclohexyl ether and mixtures thereof;

iv. a carboxylic acid that may comprise a material selected from Lauric acid, Myristic acid, 2,4-dimethoxybenzoic acid, 2,4-dimethyl-2-pentenoic acid, gcranic acid, salicylic acid, Cyclohexylacetic acid and mixtures thereof;

v. a nitrile that may comprise a material selected from Lauryl nitrile, 2-phenyl hexanenitrile, methyl 2-[{(4-(4-hydroxy-4-methylpentyl)-1-cyclohexenyl)methylene}amino}benzoate, 2,2,4-trimethyl-4-phenyl-butanenitrile, 3,7-dimethyloctanenitrile, (e)-3-phenyl-2-propenenitrile, 3,7-dimethyl-6-octenenitrile and mixtures thereof;

vi. an amine that may comprise a material selected from 4-(4,8-dimethyl-3,7-nonadienyl) pyridine, (2-methylpropyl)-quinoline and mixtures thereof;

vii. a ketone that may comprise a material selected from Dihyclrojasmone, Methyl-beta-ionone, Methyl heptenone, 6,10-dimethylundecen-2-one, 1,3,4,6,7,8a-hexahydro-1,1,5,5-tetramethyl-2h-2,4a-methanonaphthalen-8(5h)-one, 5-Cyclohexadecen-1-one, Ionone and mixtures thereof;

viii. an aldehyde that may comprise a material selected from Lauric aldehyde, Amyl Cinnamic Aldehyde, 3,6(and 4,6)-dimethylcyclohex-3-ene-1-carboxaldehyde, 2,4-dimethyl-3-cyclohexene-1-carboxaldehyde, 1-methyl-4-(4-methyl-3-pentenyl)cyclohex-3-ene-1-carboxaldehyde, 3-(and 4-)(4-methyl-3-pnetyl)cyclohex-3-ene-1-carboxaldehyde, ((3,7,-dimethyl-6-octenyl)oxy)acetaldehyde and mixtures thereof;

ix. a hydrocarbon that may comprise a material selected from isolongifolene, Limonene, Terpinolene, 3,7-dimethyl-1,3,6-octatriene, Bisabolene Alpha-pinene and mixtures thereof;

x. a Schiff base that may comprise a material selected from Methyl anthranilate/citronellal Schiff Base, Isononylaldehyde/methylanthranilale Schiff Base, Methyl N-(3,7-dimethyl-7-hydroxyoclylidene)-anthranilate Schiff Base and mixtures thereof;

xi. a wax that may comprise a material selected from the group consisting of carnauba wax, beeswax, paraffin, petrolatum, polytetrafluoroethylene wax, and mixtures thereof;

xii. a natural oil, synthetic oil or mixture thereof that may comprise a material selected from the group consisting of lavender oil, cedarwood oil, vegetal oil, brominated oil, eucalyptol oil, Ylang Ylang oil, patchouli oil, bergamot oil and mixtures thereof, is disclosed;

with the proviso that the hydrophobic material does not contain alcohols and/or primary amine when a combination of hydrophilic and hydrophobic monomers are used to form a polymeric shell encapsulating said core.

In one aspect of said consumer product, said particle may have a benefit agent release of at least 10%, at least 25%, at least 35%, from 50% to about 100%, from 65% to about 95%, or even from 85% to about 95% of said benefit agent after 10 minutes, 8 minutes or even 5 minutes of use of such consumer product containing said particles.

In one aspect, a consumer product, wherein at least 75%, 85% or even 90% of said particles may have a

particle size of from about 1 micron to about 120 microns, or from about 1 micron to about 20 microns, is disclosed. In another aspect, said particles may have a particle size from about 15 microns to about 80 microns or even form about 25 microns to about 45 microns.

In one aspect, a consumer product, wherein, at least 75%, 85% or even 90% of said particles may have a particle wall thickness of from about 30 nm to about 500 nm, from about 40 nm to about 250 nm, or even from about 50 nm to about 150 nm, is disclosed.

In one aspect, a consumer product, that may comprise a material selected from the group consisting of a scavenger, a structurant, an anti-agglomeration agent and mixtures thereof, is disclosed.

In one aspect, the core of said consumer product's particle comprises at least a portion of said structurant.

In one aspect, a consumer product, that may comprise, based total consumer product weight, less than 85%, less than 60, less than 40%, less than 20% total water, is disclosed.

In one aspect, a consumer product that may comprise, based total consumer product weight, from about 1% to about 85%, from about 3% to about 60%, from about 5% to about 40%, from about 5% to about 20% total water, is disclosed.

In one aspect of said consumer product, said consumer product may comprise a perfume delivery or any combination of perfume delivery systems described, for example, in USPA 2007/0275866 A1: Molecule-Assisted Delivery (MAD) systems; Fiber-Assisted Delivery (FAD) systems; Amine Assisted Delivery (AAD; Cyclodextrin Delivery System (CD); Starch Encapsulated Accord (SEA); Inorganic Carrier Delivery System (ZIC); Pro-Perfume (PP) including Amine Reaction Products (ARPs); and other Polymer Assisted Delivery (PAD) systems.

In addition to the foregoing aspects of said consumer product, aspects of Applicants consumer products may comprise/have any combination of characteristics and/or parameters disclosed in the present specification. Thus, by way of example, a consumer product may comprise any combination of characteristics and/or combination of particles disclosed in this specification.

The suitable materials and equipment for practicing the present invention may be obtained from: United Initiators, GmbH & Co.KG, Dr.-Gustav-Adolph-Str.3, 82049 Pullach, Germany; Emerson Resources INC, Suite 1, 600 Markley Street, Norristown, PA. 19401, United States; Appleton, 825 E Wisconsin Avenue, P.O.Box 359, WI 54912-0359, United States; Sigma Aldrich NV/SA, Kardinaal Cardijnplein 8, 2880 Bornem, Belgium; ProCepT nv, Rosteyne 4, 9060 Zelzate, Belgium; Ingeniatrics, Avd. Américo Vespucio 5-4, 1ª p., mód. 12, Sevilla, Spain; GEA Process Engineering Inc. • 9165 Rumsey Road • Columbia, MD 21045, United States; Mettler-Toledo, Inc., 1900 Polaris Parkway, Columbus, OH, 43240, United States; IKA-Werke GmbH & Co. KG, Janke & Kunkel Str. 10, 79219 Staufen, Germany; Alfa Aesar GmbH & Co KG, Zeppelinstrasse 7, 76185 Karlsruhe, Germany; Netzsch-Condux Mahltechnik GmbH, Rodenbacher Chaussee 1, 63457 Hanau, Germany; International Flavors & Fragrances, Global Headquarters, 521 West 57th Street, 10019 New York, United States; Firmenich SA - Corporate Headquarters, Rue de la Bergère 7, P.O. Box 148, Meyrin 2 CH-1217, Switzerland; Corporate Headquarters Givaudan SA, 5, chemin de la parfumerie, 1214 Vernier, Switzerland.

## Process of Making Consumer Products

In one aspect, a process of making a consumer product, that may comprise a consumer product adjunct material and a particle is disclosed, said process may comprise:

a) preparing a core material that may comprise a solid, water soluble benefit agent, a protective suspension agent having a viscosity at 25°C of from about 500 centistokes to about 2,000,000 centistokes, from about 1000 centistokes to about 800,000 centistokes or even from about 1000 centistokes to about 300,000 centistokes. In one aspect, said protective suspension agent may comprise a silicone material having a viscosity of at least 30,000 centistokes or from about 30,000 centistokes to about 60,000 centistokes; and an optional hydrophobic organic material and cooling this core material, for example, to a temperature of from about 0°C to about 4°C;

b) preparing a first solution that may comprise, based on total solution weight, from about 0.1% to about 5%, an emulsifier, that may comprise polyvinyl alcohol, and cooling this first solution, for example, to a temperature of from about 0°C to about 25°C;

c) preparing a second solution that may comprise, based on total solution weight, from about 65% to about 97% core material, and one or more hydrophobic monomers, that may comprise diacyl chlorides, diisocyanates and/or bischloroformates. In one aspect, such diacyl chlorides may comprise trimesoyl chloride, teraphthaloyl chloride, acetyl chloride, benzoyl chloride; in one aspect such diisocyanate may comprise 1-isocianato-4-[(4-fenilisocianato)metil]benzene, 2,4-diisocyanato-1-methyl-benzene, 1,6-diisocyanalohexane, 5-isocyanato-1-(isocyanatomethyl)-1,3,3-trimethyl-cyclohexane; in one aspect such bischloroformates may comprise bisphenol A bis(chloroformate), bisphenol Z bis(chloroformate), and cooling this second solution, for example, to a temperature of from about 0°C to about 4°C;

d) preparing a third solution that may comprise, based on total solution weight, from about 10% to about 90% water,

and one or more hydrophilic monomers comprising di-amines, triamines and/or diols. In one aspect, such di- and triamines may comprise diethylene triamine, hexamethylene diamine, ethylene diamine. In one aspect, such diol may comprise ethylene glycol, 1,2-propanediol, 1,3-propanediol, 1-propen-1,3-diol, 1,4-butanediol, 1,3-butanodiol, 1,2-butanediol, 3-butene-1,2-diol, 3-butene-1,4-diol, 1,5-pentanediol, 1-penten-1,5-diol, 1,6-hexanediol, 3,4-dihydroxy-3-cyclobutene-1,2-dione, 5-hydroxy-2-(hydroxymethyl)-4H-pyran-4-one, (2*E*)-2,3-dihydroxy-2-butenedioic acid hydrate, 2,3,5,6-tetrahydroxybenzo-1,4-quinone, 4,4-dimethyl-1,2-cyclopentanediol, 3-methyl-1,3,5-pentanetriol, 3-methyl-1,5-pentanediol, (1S,2S)-1,2-cyclopentanediol, 1,3-cyclohexanediol, 1,5-hexanediol, 1,2,6-hexanetriol, 1,2,4-butanetriol, and cooling this third solution, for example, to a temperature of from about 0°C to about 25°C;
e) forming a first composition at temperature of from about 0°C to about 25°C, by either combining said second solution and said first solution and emulsifying said first composition; or emulsifying said second solution in said first solution via a micro-device. In one aspect, said micro-device is selected from the group consisting of a cross flow membrane, and/or a flow focusing technology;
f) combining said first composition and said third solution to form a second composition and optionally combining any processing aids and said second composition;
g) stirring said second composition for at least 15 minutes at a temperature of from about 0°C to about 25°C and optionally combining any processing aids to said second composition;
h) optionally combining any scavenger material, neutralizing agent, structurant, salts and/or anti-agglomeration agent with said second composition during step g.) or thereafter;
i) optionally spray drying or agglomerating said second composition;
j) combining said second composition with one or more consumer product adjuncts.

In one aspect, a process of making a consumer product, comprising a consumer product adjunct material and a particle is disclosed, said process may comprise:

a) preparing a core material that comprise a solid, water soluble benefit agent, a protective suspension agent having a viscosity at 25°C of from about 500 centistokes to about 2,000,000 centistokes, from about 1000 centistokes to about 800,000 centistokes or even from about 1000 centistokes to about 300,000 centistokes. In one aspect, said protective suspension agent may comprise a silicone material having a viscosity of at least 30,000 centistokes, or from about 30,000 centistokes to about 60,000 centistokes and an optional hydrophobic organic material and cooling this core material, for example to a temperature of from about 0°C to about 4°C;
b) preparing a first solution that may comprise, based on total solution weight, from about 0.1% to about 10%, of a polymer having a cloud point between 0°C and 120°C, or between 20°C and 60°C. In one aspect, such polymer may comprise poly-(N-isopropylacrylamide), poly-(vinyl alcohol-co-vinyl acetate), poly-(acrylamide-co-diacetoneacrylamide), ethyl cellulose and mixtures thereof. In one aspect, the polymer may comprise a polyvinyl alcohol derivate. Then, said first solution is cooled, for example, to a temperature of from about 0°C to about 4°C;
c) optionally, lowering the cloud point of the polymer contained in said first solution. In one aspect, the cloud point of the polymer may be lowered by increasing the ionic strength of said solution, for example by adding salt to said first solution;
d) preparing a second solution that may comprise, based on total solution weight, from about 50% to about 70% water, from about 5 to 20% of a water miscible, organic solvent, for example, methanol; from about 0.1% to about 1% of a strong acid, for example sulfuric acid; from about 2% to about 10% of a weak acid, for example acetic acid; and from about 15% to about 25% of a cross-linking agent, for example, gluteraldehyde;
e) preparing a third solution that may comprise, based on total third solution weight, from about 70% to about 99% water, and one or more electrolytes comprising sodium sulphate, sodium phosphate, sodium citrate, sodium carbonate, sodium acetate and mixtures thereof;
f) forming a first composition at temperature of from about 0°C to about 25°C, by either combining said core material and said first solution and emulsifying said first composition; or emulsifying said core material in said first solution via a micro-device, for example a micro-device selected from the group consisting of a cross flow membrane, and/or a flow focusing technology;
g) adding said third solution to said first composition to form a second composition and optionally combining any processing aids and said second composition;
h) increasing the temperature of said second composition at a rate from about 0.2°C/min to about 5°C/min;
i) mixing said second composition for at least 15 minutes at a temperature from about 1°C to about 10°C above the cloud point of said second composition;
j) adding said second solution to said second composition to form a third composition and optionally combining any processing aids and said third composition;
k) optionally combining any scavenger material, neutralizing agent, structurant, salts and/or anti-agglomeration agent with said third composition during step j.) or thereafter;

l) optionally spray drying or agglomerating said third composition;
m) combining said third composition with one or more consumer product adjuncts.

In one aspect, a process of making a consumer product comprising a consumer product adjunct material and a particle, said process may comprise:

a) preparing a core material that may comprise a solid, water soluble benefit agent, a protective suspension agent having a viscosity at 25°C of from about 500 centistokes to about 2,000,000 centistokes, from about 1000 centistokes to about 800,000 centistokes or even from about 1000 centistokes to about 300,000 centistokes, in one aspect, said protective suspension agent may comprise a silicone material having a viscosity of at least 30,000 centistokes, or from about 30,000 centistokes to about 60,000 centistokes and an optional hydrophobic organic material;
b) preparing a first solution that may comprise, based on total solution weight, from about 50% to about 98% water, a first water soluble polymer;
c) combining a core material and said first solution to form a first composition;
d) emulsifying said first composition;
e) optionally combining said first composition and any plasticizer or pore former;
f) spray drying or agglomerating said first composition
g) combining said first composition with one or more consumer product adjuncts..

In one aspect, a process of making a consumer product, comprising a consumer product adjunct material and a particle is disclosed, said process may comprise:

a) preparing a core material that may comprise a solid, water soluble benefit agent, a protective suspension agent having a viscosity at 25°C of from about 500 centistokes to about 2,000,000 centistokes, from about 1000 centistokes to about 800,000 centistokes or even from about 1000 centistokes to about 300,000 centistokes. In one aspect, said protective suspension agent may comprise a silicone material having a viscosity of at least 30,000 centistokes, or from about 30,000 centistokes to about 60,000 centistokes.
b) preparing a first solution that may comprise, based on total solution weight, from about 0.1% to about 5%, of an emulsifier, for example, polyvinyl alcohol;
c) preparing a second solution that may comprise, based on total solution weight, from about 50% to about 98% of a volatile hydrophobic organic solvent having a boiling point from about 25°C to about 75°C, from about 35°C to about 65°C, or even from about 40°C to about 55°C and a polymer;
d) combining said core material and said second solution to form a first composition and homogenizing said first composition, for example by mixing;
e) forming a second composition by either combining said first composition and said first solution and emulsifying said second composition; or emulsifying said first composition in said first solution via a micro-device, In one aspect, said micro-device may be selected from the group consisting of a cross flow membrane, and/or a flow focusing technology;
f) evaporating, for example, under vacuum, a sufficient amount of said volatile hydrophobic organic solvent to form particles and optionally combining any processing aids to said second composition;
g) optionally collecting the particles; and
h) combining said particles and/or said second composition with one or more consumer product adjuncts..

The aforementioned shell materials may be obtained from CP Kelco Corp. of San Diego, California, USA; Degussa AG or Dusseldorf, Germany; BASF AG of Ludwigshafen, Germany; Rhodia Corp. of Cranbury, New Jersey, USA; Baker Hughes Corp. of Houston, Texas, USA; Hercules Corp. of Wilmington, Delaware, USA; Agrium Inc. of Calgary, Alberta, Canada G.M. Chemie Pvt Ltd, Mumbai, 400705, India, Eastman Chemical Company, Kingsport, USA and International Specialty Products of Wayne, New Jersey USA.
Suitable hydrophobic organic materials are listed in Tables 1-10 below.

Table 1: Examples of alcohols

| Name | CAS |
|---|---|
| Lauryl alcohol | 112-53-8 |
| Citronellol | 106-22-9 |
| Alpha-terpineol | 98-55-5 |

(continued)

| Name | CAS |
|---|---|
| 2-tert-butylcyclohexanol | 13491-79-7 |
| 2,6-dimethyl-2-octanol | 18479-57-7 |
| 3,7-dimethyl-3-octanol and 2,6-dimethyl-2-octanol | 78-69-3/18479-57-7 |
| 2-methyl-4-(2,2,3-trimethyl-3-cyclopentenyl)-2-buten-1-ol | 28219-60-5 |
| linalool | 78-70-6 |
| Tetrahydrolinalool | 78-69-3 |

Table 2: Examples of esters

| Name | CAS |
|---|---|
| Methyl laurate | 111-82-0 |
| Methyl jasmonate | 39924-52-2 |
| Hexyl isovalerate | 10032-13-0 |
| Geranyl acetate | 16409-44-2 |
| 1,4-dioxacyclohexadecane-5,16-dione | 54982-83-1 |
| 4-tert-butylcyclohexyl acetate | 32210-23-4 |
| 3,5,5-trimethylhexyl acetate | 58430-94-7 |
| Ethyl-2-methylpentanoate | 39255-32-8 |
| Ethyl Methyl-2-Butyrate | 7452-79-1 |
| Isopropyl myristate | 110-27-0 |

Table 3: Examples of ethers

| Name | CAS |
|---|---|
| (3z)-1-[(2-methyl-2-propenyl)oxyl-3-hexene | 292605-05-1 |
| decahydrospiro[furan-2(3h),5'-[4.7]methano[5h[indene] | 68480-11-5 |
| 4,9,12,12-tetramethyl-5-oxatricyclo[8.2.0.0(4,6)]dodecane | 1209-61-6 |
| decahydro-2,6,6,7,8,8-hexamethyl-2h-indeno[4,5-b]furan (and isomers there of) | 338735-71-0 / 351343-77-6 |
| 2-(1-ethylpentyl)-1,3-dioxolane | 4359-47-1 |
| 2-methyl-1,5-dioxaspiro[5.5]undecane | 6413-26-9 |
| phenyl ethyl cyclohexyl ether | 80858-47-5 |

Table 4: Examples of carboxylic acids

| Name | CAS |
|---|---|
| Lauric acid | 143-07-7 |
| Myristic acid | 544-63-8 |
| 2,4-dimethoxybenzoic acid | 91-52-1 |
| 2,4-dimethyl-2-pentenoic acid | 21016-46-6 |
| geranic acid | 459-80-3 |

(continued)

| Name | CAS |
|---|---|
| salicylic acid | 69-72-7 |
| Cyclohexylacetic acid | 5292-21-7 |

Table 5: Examples of nitriles

| Name | CAS |
|---|---|
| Lauryl nitrile | 2437-25-4 |
| 2-phenyl hexanenitrile | 3508-98-3 |
| methyl 2-[{(4-(4-hydroxy-4-methylpentyl)-1-cyclohexenyl)methylene}amino}benzoate | 67634-12-2 |
| 2,2,4-trimethyl-4-phenyl-butanenitrile | 75490-39-0 |
| 3,7-dimethyloclanenitrile | 40188-41-8 |
| (e)-3-phenyl-2-propenenitrile | 1885-38-7 |
| 3,7-dimethyl-6-octenenitrile | 51566-62-2 |

Table 6: Examples of amines

| Name | CAS |
|---|---|
| 4-(4,8-dimethyl-3,7-nonadienyl) pyridine | 38462-23-6 |
| (2-methylpropyl)-quinoline | 1333-58-0 |
| | 89-43-0 |

Table 7: examples of ketones

| Name | CAS |
|---|---|
| Dihydrojasmone | 1128-08-1 |
| Methyl-beta-ionone | 127-43-5 |
| Methyl heptenone | 110-93-0 |
| 6,10-dimethylundecen-2-one | 1322-58-3 |
| 1,3,4,6,7,8a-hexahydro-1,1,5,5-tetramethyl-2h-2,4a-methanonaphthalen-8(5h)-one | 23787-90-8 |
| 5-Cyclohexadecen-1-one | 37609-25-9 |
| Ionone | 8013-90-9 |

Table 8: Examples of aldehydes

| Name | CAS |
|---|---|
| Lauric aldehyde | 112-54-9 |
| Amyl Cinnamic Aldehyde | 122-40-7 |
| 3,6(and 4,6)-dimethylcyclohex-3-ene-1-carboxaldehyde | 27939-60-2 |
| 2,4-dimethyl-3-cyclohexene-1-carboxaldehyde | 68039-49-6 |
| 1-methyl-4-(4-methyl-3-pentenyl)cyclohex-3-ene-1-carboxaldehyde | 52474-86-2 |

(continued)

| Name | CAS |
|---|---|
| 3-(and 4-)(4-methyl-3-pnetyl)cyclohex-3-ene-1-carboxaldehyde | 37677-14-8/52475-89-5 |
| ((3,7,-dimethyl-6-octenyl)oxy)acetaldehyde | 7492-67-3 |

Table 9: Examples of hydrocarbons

| Name | CAS |
|---|---|
| isolongifolene | 1135-66-6 |
| Limonene | 5989-27-5 |
| Terpinolene | 586-62-9 |
| 3,7-dimethyl-1,3,6-octatriene | 13877-91-3 |
| Bisabolene | 17627-44-0, 502-611-4, 18794-84-8 |
| Alpha-pinene | 80-56-8 |

Table 10: Examples of Schiff bases

| Name | CAS |
|---|---|
| Methyl anthranilate/citronellal Schiff Base | 67845-42-5 |
| Isononylaldehyde/methylanthranilate Schiff Base | 67801-42-7 |
| Methyl N-(3,7-dimethyl-7-hydroxyoctylidene)-anthranilate | 89-43-0 |

Such materials may be used alone or in any combination. Thus, it is understood that, mixtures thereof are disclosed.

Adjunct Materials

For the purposes of the present invention, the non-limiting list of adjuncts illustrated hereinafter are suitable for use in the instant compositions and may be desirably incorporated in certain embodiments of the invention, for example to assist or enhance performance, for treatment of the substrate to be cleaned, or to modify the aesthetics of the composition as is the case with perfumes, colorants, dyes or the like. It is understood that such adjuncts are in addition to the components supplied by the recited particle and other recited materials such as perfume delivery systems. The precise nature of these additional components, and levels of incorporation thereof, will depend on the physical form of the composition and the nature of the operation for which it is to be used. Suitable adjunct materials include, but are not limited to, surfactants, builders, chelating agents, dye transfer inhibiting agents, dispersants, enzymes, and enzyme stabilizers, catalytic materials, bleach activators, polymeric dispersing agents, clay soil removal/anti-redeposition agents, brighteners, suds suppressors, dyes, additional perfume, structure elasticizing agents, fabric softeners, carriers, hydrotropes, processing aids and/or pigments. In addition to the disclosure below, suitable examples of such other adjuncts and levels of use are found in U.S. Patent Nos. 5,576,282, 6,306,812 B1 and 6,326,348 B1 that are incorporated by reference.

Each adjunct ingredients is not essential to Applicants' compositions. Thus, certain embodiments of Applicants' compositions do not contain one or more of the following adjuncts materials: bleach activators, surfactants, builders, chelating agents, dye transfer inhibiting agents, dispersants, enzymes, and enzyme stabilizers, catalytic metal complexes, polymeric dispersing agents, clay and soil removal/anti-redeposition agents, brighteners, suds suppressors, dyes, additional perfumes and perfume delivery systems, structure elasticizing agents, fabric softeners, carriers, hydrotropes, processing aids and/or pigments. It is understood that such adjuncts may form a product matrix that is combined with the encapsulates disclosed herein to form a finished consumer product. Generally, when one or more adjuncts are present, such one or more adjuncts may be present as detailed below:

Surfactants - The compositions according to the present invention can comprise a surfactant or surfactant system

wherein the surfactant can be selected from nonionic and/or anionic and/or cationic surfactants and/or ampholytic and/or zwitterionic and/or semi-polar nonionic surfactants. The surfactant is typically present at a level of from about 0.1%, from about 1%, or even from about 5% by weight of the cleaning compositions to about 99.9%, to about 80%, to about 35%, or even to about 30% by weight of the cleaning compositions.

Builders - The compositions of the present invention can comprise one or more detergent builders or builder systems. When present, the compositions will typically comprise at least about 1% builder, or from about 5% or 10% to about 80%, 50%, or even 30% by weight, of said builder. Builders include, but are not limited to, the alkali metal, ammonium and alkanolammonium salts of polyphosphates, alkali metal silicates, alkaline earth and alkali metal carbonates, aluminosilicate builders polycarboxylate compounds, ether hydroxypolycarboxylates, copolymers of maleic anhydride with ethylene or vinyl methyl ether, 1,3,5-trihydroxybenzene-2,4,6-trisulphonic acid, and carboxymethyl-oxysuccinic acid, the various alkali metal, ammonium and substituted ammonium salts of polyacetic acids such as ethylenediamine tetraacetic acid and nitrilotriacetic acid, as well as polycarboxylates such as mellitic acid, succinic acid, oxydisuccinic acid, polymaleic acid, benzene 1,3,5-tricarboxylic acid, carboxymethyloxysuccinic acid, and soluble salts thereof.

Chelating Agents - The compositions herein may also optionally contain one or more copper, iron and/or manganese chelating agents. If utilized, chelating agents will generally comprise from about 0.1% by weight of the compositions herein to about 15%, or even from about 3.0% to about 15% by weight of the compositions herein.

Dye Transfer Inhibiting Agents - The compositions of the present invention may also include one or more dye transfer inhibiting agents. Suitable polymeric dye transfer inhibiting agents include, but are not limited to, polyvinylpyrrolidone polymers, polyamine N-oxide polymers, copolymers of N-vinylpyrrolidone and N-vinylimidazole, polyvinyloxazolidones and polyvinylimidaroles or mixtures thereof. When present in the compositions herein, the dye transfer inhibiting agents are present at levels from about 0.0001%, from about 0.01%, from about 0.05% by weight of the cleaning compositions to about 10%, about 2%, or even about 1% by weight of the cleaning compositions.

Dispersants - The compositions of the present invention can also contain dispersants. Suitable water-soluble organic materials are the homo- or co-polymeric acids or their salts, in which the polycarboxylic acid may comprise at least two carboxyl radicals separated from each other by not more than two carbon atoms.

Enzymes - The compositions can comprise one or more detergent enzymes which provide cleaning performance and/or fabric care benefits. Examples of suitable enzymes include, but are not limited to, hemicellulases, peroxidases, proteases, cellulases, xylanases, lipases, phospholipases, esterases, cutinases, pectinases, keratanases, reductases, oxidases, phenoloxidases, lipoxygenases, ligninases, pullulanases, tannases, pentosanases, malanases, β-glucanases, arabinosidases, hyaluronidase, chondroitinase, laccase, and amylases, or mixtures thereof. A typical combination is a cocktail of conventional applicable enzymes like protease, lipase, cutinase and/or cellulase in conjunction with amylase.

Enzyme Stabilizers - Enzymes for use in compositions, for example, detergents can be stabilized by various techniques. The enzymes employed herein can be stabilized by the presence of water-soluble sources of calcium and/or magnesium ions in the finished compositions that provide such ions to the enzymes.

Catalytic Metal Complexes - Applicants' compositions may include catalytic metal complexes. One type of metal-containing bleach catalyst is a catalyst system comprising a transition metal cation of defined bleach catalytic activity, such as copper, iron, titanium, ruthenium, tungsten, molybdenum, or manganese cations, an auxiliary metal cation having little or no bleach catalytic activity, such as zinc or aluminium cations, and a, sequestrate having defined stability constants for the catalytic and auxiliary metal cations, particularly ethylenediaminetetraacetic acid, ethylenediaminetetra (methyl-enephosphonic acid) and water-soluble salts thereof. Such catalysts are disclosed in U.S. patent 4,430,243.

If desired, the compositions herein can be catalyzed by means of a manganese compound. Such compounds and levels of use are well known in the art and include, for example, the manganese-based catalysts disclosed in U.S. patent 5,576,282.

Cobalt bleach catalysts useful herein are known, and are described, for example, in U.S. patents 5,597,936 and 5,595,967. Such cobalt catalysts are readily prepared by known procedures, such as taught for example in U.S. patents 5,597,936, and 5,595,967.

Compositions herein may also suitably include a transition metal complex of a macropolycyclic rigid ligand - abbreviated as "MRL". As a practical matter, and not by way of limitation, the compositions and cleaning processes herein can be adjusted to provide on the order of at least one part per hundred million of the benefit agent MRL species in the aqueous washing medium, and may provide from about 0.005 ppm to about 25 ppm, from about 0.05 ppm to about 10 ppm, or even from about 0.1 ppm to about 5 ppm, of the MRL in the wash liquor.

Suitable transition-metals in the instant transition-metal bleach catalyst include manganese, iron and chromium. Suitable MRL's herein are a special type of ultra-rigid ligand that is cross-bridged such as 5,12-diethyl-1,5,8,12-tetraazabicyclo[6.6.2]hexa-decane.

Suitable transition metal MRLs are readily prepared by known procedures, such as taught for example in U.S. patent 6,225,464.

External structuring system:

The composition of the present invention may comprise from 0.01% to 5%, or even from 0.1% to 1% by weight of an external structuring system. The external structuring system may be selected from the group consisting of:

(i) non-polymeric crystalline, hydroxy-functional structurants and/or
(ii) polymeric structurants

Such external structuring systems may be those which impart a sufficient yield stress or low shear viscosity to stabilize a fluid laundry detergent composition independently from, or extrinsic from, any structuring effect of the detersive surfactants of the composition. They may impart to a fluid laundry detergent composition a high shear viscosity at 20 s-1 at 21°C of from 1 to 1500 cps and a viscosity at low shear (0.05 s-1 at 21°C) of greater than 5000 cps. The viscosity is measured using an AR 550 rheometer from TA instruments using a plate steel spindle at 40 mm diameter and a gap size of 500 $\mu$m. The high shear viscosity at 20s-1 and low shear viscosity at 0.5s-1 can be obtained from a logarithmic shear rate sweep from 0.1s-1 to 25s-1 in 3 minutes time at 21°C. In one embodiment, the compositions may comprise from 0.01 to 1% by weight of a non-polymeric crystalline, hydroxyl functional structurant. Such non-polymeric crystalline, hydroxyl functional structurants may comprise a crystallizable glyceride which can be pre-emulsified to aid dispersion into the final unit dose laundry detergent composition. Suitable crystallizable glycerides include hydrogenated castor oil or "HCO" or derivatives thereof, provided that it is capable of crystallizing in the liquid detergent composition.

Unit dose laundry detergent compositions may comprise from 0.01 to 5% by weight of a naturally derived and/or synthetic polymeric structurant. Suitable naturally derived polymeric structurants include: hydroxyethyl cellulose, hydrophobically modified hydroxyethyl cellulose, carboxymethyl cellulose, polysaccharide derivatives and mixtures thereof. Suitable polysaccharide derivatives include: pectine, alginate, arabinogalactan (gum Arabic), carrageenan, gellan gum, xanthan gum, guar gum and mixtures thereof. Suitable synthetic polymeric structurants include: polycarboxylates, polyacrylates, hydrophobically modified ethoxylated urethanes, hydrophobically modified non-ionic polyols and mixtures thereof. In one aspect, the polycarboxylate polymer may be a polyacrylate, polymethacrylate or mixtures thereof. In another aspect, the polyacrylate may be a copolymer of unsaturated mono- or di-carbonic acid and $C_1$-$C_{30}$ alkyl ester of the (meth)acrylic acid. Such copolymers are available from Noveon inc under the tradename Carbopol® Aqua 30.

Method of Use

Certain of the consumer products disclosed herein can be used to clean or treat a situs *inter alia* a surface or fabric. Typically at least a portion of the situs is contacted with an embodiment of Applicants' consumer product, in neat form or diluted in a liquor, for example, a wash liquor and then the situs may be optionally washed and/or rinsed. In one aspect, a situs is optionally washed and/or rinsed, contacted with an aspect of the consumer product and then optionally washed and/or rinsed. For purposes of the present invention, washing includes but is not limited to, scrubbing, and mechanical agitation. The fabric may comprise most any fabric capable of being laundered or treated in normal consumer use conditions. Liquors that may comprise the disclosed compositions may have a pH of from about 3 to about 11.5. Such compositions arc typically employed at concentrations of from about 500 ppm to about 15,000 ppm in solution. When the wash solvent is water, the water temperature typically ranges from about 5 °C to about 90 °C and, when the situs comprises a fabric, the water to fabric ratio is typically from about 1:1 to about 30:1.

Employing one or more of the aforementioned methods results in a treated situs.

TEST-METHODS

It is understood that the test methods that are disclosed in the Test Methods Section or the present application should be used to determined the respective values of the parameters of Applicants' invention as such invention is described and claimed herein.

(1) Fracture Strength

a.) Place 1 gram of particles in 1 liter of distilled deionized (DI) water.
b.) Permit the particles to remain in the DI water for 10 minutes and then recover the particles by filtration, using a

60mL syringe filter, 1.2 micron nitrocellulose filter (Millipore, 25mm diameter).

c.) Determine the rupture force of 50 individual particles. The rupture force of a particle is determined using the procedure given in Zhang, Z.; Sun, G; "Mechanical Properties of Melamine-Formaldehyde microcapsules, " J. Microencapsulation, vol. 18, no. 5, pages 593-602, 2001. Then calculate the fracture strength of each particle by dividing the rupture force (in Newtons) by the cross-sectional area of the respective spherical particle ($\pi r^2$, where r is the radius of the particle before compression), said cross-sectional area being determined as follows: measuring the particle size of each individual particle using the experimental apparatus and method of Zhang, Z.; Sun, G; "Mechanical Properties of Melamine-Formaldehyde microcapsules," J. Microencapsulation, vol 18, no. 5, pages 593-602, 2001.

d.) Use the 50 independent measurements from c.) above, and calculate the percentage of particles having a fracture strength within the claimed fracture strength range.

(2) ClogP

The "calculated logP" (ClogP) is determined by the fragment approach of Hansch and Leo (cf., A. Leo, in Comprehensive Medicinal Chemistry, Vol. 4, C. Hansch, P.G. Sammens, J.B. Taylor, and C.A. Ramsden, Eds. P. 295, Pergamon Press, 1990, incorporated herein by reference). ClogP values may be calculated by using the "CLOGP" program available from Daylight Chemical Information Systems Inc. of Irvine, California U.S.A.

(3) Particle Size

a.) Place 1 gram of particles in 1 liter of distilled deionized (DI) water.

b.) Permit the particles to remain in the DI water for 10 minutes and then recover the particles by filtration, using a 60mL syringe filter, 1.2 micron nitrocellulose filter (Millipore, 25mm diameter).

c.) Determine the particle size of 50 individual particles using the experimental apparatus and method of Zhang, Z.; Sun, G; "Mechanical Properties of Melamine-Formaldehyde microcapsules," J. Microencapsulation, vol. 18, no. 5, pages 593-602,2001.

d.) Use the 50 independent measurements from c.) above, and calculate the percentage of particles having a particle size within the claimed range.

(4) Particle Wall Thickness

All references to Leica Microsystems refer to the Company with Corporate Headquarters located at:

Leica Microsystems GmbH
Ernst-Leitz-Strasse 17-37
35578 Wetzlar

All references to Drummond refer to the Company located at:

Drummond Scientific Company
500 Parkway, Box 700
Broomall, PA 19008

All references to Hitachi refer to the Company with Corporate Headquarters located at: Hitachi High Technologies
24-14,Nishi-Shimbashi 1-chome,Minato-ku,
Tokyo 105-8717,Japan

All references to Gatan refer to the Company with Corporate Headquarters located at: Gatan, Inc.
5933 Coronado Lane
Pleasanton, CA 94588

All references to Quartz refer to the Company with offices located at:

Quartz Imaging Corporation
Technology Enterprise Facility III
6190 Agronomy Rd, Suite 406

Vancouver, B.C. Canada V6T 1Z3

Materials:

Methylcyclohexane - Alfa Aesar Catalogue Number A16057 or equivalent
Capillary Pipette - Drummond Catalogue Number 5-000-1005 or equivalent
Flat Specimen Carrier - Leica Microsystems P/N 706897 or equivalent
Copper Washers -- Leica Microsystems P/N 706867 or equivalent
Flat Specimen Pod - Leica Microsystems P/N 706839 or equivalent
Loading Device for Flat Specimen Holder - Leica Microsystems P/N 706832 or equivalent
Torque Wrench - Leica Microsystems P/N 870071 or equivalent
Allen Bit, 2 mm -- Leica Microsystems P/N 870072 or equivalent
Forceps - Leica Microsystems P/N 840105 or equivalent
Gatan Planchette Collet -- Gatan P/N PEP5099
Gatan Planchette Specimen Holder - Gatan P/N PEP13995

Instruments:

Scanning Electron Microscope -- Hitachi Model S-5200 SEM/STEM or equivalent
High Pressure Freezer - Leica Microsystems Model 706802 EM Pact or equivalent
Cryotransfer Device - Gatan Model CT3500 or equivalent
Cryotransfer System - Gatan Model CT2500 or equivalent
Gatan ITC Temperature Controller - Gatan Model ITC502 or equivalent
Image Analysis Software - Quartz PCI Version 5 or equivalent
Sample : Obtain the sample of microcapsules as per the procedure of 1 above entitled "Fracture Strength". 50 samples are required.

Test Procedure

1) Turn on the Leica Microsystems High Pressure Freezer (Leica Microsystems Model Number 706802).
2) Fill up the methylcyclohexane container on the High Pressure Freezer with methylcyclohexane (Alfa Aesar Cat. # A16057 or equivalent).
3) Fill up the liquid nitrogen dewar on the High Pressure Freezer.
4) Fill the liquid nitrogen bath on the High Pressure Freezer
5) The display on the High Pressure Freezer will show Load Sample on the front panel when the instrument is ready to use.
6) Start the Hitachi Model S-5200 SEM/STEM and set the Accelerating Voltage to 3.0 KV and the Emission Current to 20 $\mu$A.
7) Fill the Anti-contaminator Dewar located on the lower right side of the Hitachi Model S-5200 SEM/STEM microscope column with liquid nitrogen.
8) Fill the liquid nitrogen dewar on the Gatan Alto 2500 Cryotransfer System (Gatan Model CT2500). Replenish the liquid nitrogen until the dewar remains full. The device is ready to use when the prepchamber temperature reads below -190 °C.
9) Place a copper washer (Leica Microsystems P/N 706867) on top of the flat specimen carrier such that the hole in the washer aligns with the well in the flat specimen carrier.
10) Take a glass capillary pipette (Drummond P/N 5-000-1005 or similar) and insert the provided wire plunger into one end of the pipette
11) Insert the pipette into the microcapsule dispersion and withdraw the plunger part way to pull a few microliters of the dispersion into the pipette.
12) Place the tip of the pipette in the well in the flat specimen carrier and push the plunger into the pipette to dispense a small amount of liquid until the well is just slightly overfilled.
13) Insert a 2 mm Allen key bit (Leica Microsystems P/N 870072) into the torque wrench (Leica Microsystems P/N

870071).

14) Using the torque wrench with the bit, loosen the Diamond Locking Screw in the Flat Specimen Pod (Leica Microsystems P/N 706839).

15) Place the Flat Specimen Holder and Copper Washer into the Flat Specimen Pod.

16) Use the torque wrench with the 2 mm Allen key bit to tighten the Diamond Locking Screw in the Flat Specimen Pod onto the specimen until the torque wrench clicks twice.

17) Attach the Loading Device for the Flat Specimen Holder (Leica Microsystems P/N 706832) to the Flat Specimen Pod by screwing it onto the exposed threads of the Diamond Locking Screw.

18) Place the Loading Device for the Flat Specimen Holder with the Flat Specimen Pod onto the EM Pact High Pressure Freezer (Leica Microsystems P/N 706802) and insert it into the High Pressure Freezer.

19) Freeze the specimen using the High Pressure Freezer.

20) Transfer the Flat Specimen Pod to the Unloading Station and unscrew the Loading Device for the Flat Specimen Carrier being careful to keep it immersed in the liquid nitrogen bath.

21) Using the torque wrench, loosen the Diamond Locking Screw.

22) Using tweezers with the tips cooled in liquid nitrogen until the liquid nitrogen stops boiling, remove the Flat Specimen Carrier from the Flat Specimen Pod and place it into a small container in the liquid nitrogen bath.

23) Place the Gatan CT3500 Cryotransfer Device (Gatan Model Number CT3500) into the Gatan Specimen Workstation.

24) Fill the liquid nitrogen dewar on the Gatan CT3500 Cryotransfer device and fill the dewar on the Gatan Specimen Workstation replenishing the liquid nitrogen as necessary until rapid boiling of the liquid nitrogen stops.

25) Transfer the Flat Specimen Holder to the Gatan Specimen Workstation while keeping it in a container of liquid nitrogen.

26) Using tweezers cooled in liquid nitrogen until the liquid nitrogen stops boiling, place the flat specimen holder into the Gatan Planchette Collet (Gatan P/N PEP5099) and press down firmly.

27) Place the assembly from step 26 into the Gatan Planchette Specimen Holder (Gatan P/N PEP1395) and press down firmly.

28) Push the Gatan Cryotransfer device back into the Gatan Specimen Workstation.

29) Using the Gatan supplied 5mm Friction Tool, screw the Gatan Planchette Specimen Holder into the Gatan Cryotransfer device.

30) Remove the Gatan Cryotransfer device from the Gatan Specimen Workstation and insert it into the Gatan Alto 2500 Cryotransfer System.

31) Attach the Gatan ITC Temperature Controller (Gatan Model Number ITC502) to the Gatan Cryotransfer device by attaching the Temperature Measurement Lead from the Gatan ITC controller to the connector on top of the Gatan Cryotransfer device.

32) Using the Gatan ITC Controller, raise the temperature of the specimen to -120 °C.

33) Using the fracturing knife, break off the copper washer to fracture the specimen.

34) Reduce the temperature of the specimen below -160 °C.

35) With the voltage set to 6 KV and the gas flow set to provide 10 mA sputter current, press the sputter button and once the current displays 10 mA, let the coater run for 60-90 seconds coating the specimen with gold/palladium.

36) Close the frost shield on the Gatan CT3500 Cryotransfer Device and transfer the specimen to the Hitachi S-5200 SEM/STEM.

37) Wait for the temperature of the Gatan CT3500 Cryotransfer device to stabilize, typically between -170 °C and -172 °C.

38) Open the frost shield on the Gatan CT3500 Cryotransfer device by turning the frost shield control knob counter-clockwise.

39) Move the sample around using the stage control trackball, locate a broken microcapsule and adjust the magnification to 50,000 to 150,000X.

40) Adjust the focus and stigmation controls to obtain the best image.

41) Acquire an image of the cross-section of the capsule wall.

Calculations

1) Select the ruler tool in the Quartz PCI software.

2) Move the cursor to one edge of the microcapsule wall.

3) Click and hold the left mouse button while dragging the mouse cursor to the opposite side of the capsule wall keeping the drawn line perpendicular to the face of the capsule wall to measure the wall thickness.

4) Use 50 independent measurements (1 measurement for each capsule) to calculate the percentage of particles having a wall thickness in the claimed range.

(5) Solid, Water Soluble Benefit Agent Release Test

Material and instruments needed:

1. launder-o-meter (launder-o-meter procedures are described in the Technical Manual of the AATCC)
2. Test pieces of soiled fabric 10x10cm as described in JAOCS, Vol. 66, n.1 (January 1989)
3. A canister of 50 steel balls of 6 mm diameter
4. Industrial water (2.5 mmol/L hardness)
5. Detergent composition containing particles having a core comprising a benefit agent.

Procedure:

Prepare a stainless-steel launder-o-meter container and add 250 mL of water at 30°C, 2.5 grams of a liquid detergent composition containing particles containing a benefit agent, three test pieces of soiled fabric 10x10cm and 50 steel balls. Containers are place in the launder-ometer and they are rotated for 40 minutes at 42 rpm. After 5, 8 and 10 minutes a sample is taken for analytical measurement of the benefit agent. The analysis is preformed in accordance with the applicable protocol that is listed below:

A. Analytical test for preformed peracids, bleach activators and hydrogen peroxide sources: Hydrogen peroxide in liquid bleaches liberates iodine from an acified potassium iodide solution. The free iodine is titrated potentiometrically with a standardized thiosulphate solution

$$\text{Bleach component} + 2I^- + 2H^+ \rightarrow I_2 + 2\,H_2O \qquad [1]$$

$$I_2 + I^- \leftrightarrow I_3^- \qquad [2]$$

$$I_3^- + 2S_2O_32^- \rightarrow 3I^- + S_4O_6 \qquad [3]$$

The bleach component can be a hydrogen peroxide source, a preformed peracid or a peracid generated by a bleach activator. The method measures the total amount of bleach. In case the bleach is generated from a bleach activator reacting with hydrogen peroxide, Catalase needs to be added after the peracid generation. Catalase destroys hydrogen peroxyde without influencing the peracid and only the peracid is present for further analysis.

Equipment:

- Autotitrator (fe Metrohm 809) connected to a PC
- Redox electrode (fe Metrohm 6.0431.100)

Chemicals:

- Glacial Acetic Acid (VWR 1.00063)
- KI 3 M (Sigma Aldrich 35175)
- $Na_2S_2O_3$ 0.01 N (38243, Sigma Aldrich)
- Catalase from bovine lever Fluka Biochemica 60640 ± 260000U/mL
- 10 % Sodium percarbonate aqueous solution. In order to prepare this solution, add 100g sodium carbonate (VWR ALFAA16045) to 900 mL demi-water under continuous stirring.

Procedure:

1. Hydrogen peroxide sources and preformed peracids in absence of hydrogen peroxide:

a. weigh x grams of sample in order to have between 0.05 and 0.40 grams of pure material.
b. Add 50 mL water
c. Add 10 mL of acetic acid.
d. Stir for 1 minute
e. Add 4 mL of KI solution
f. Titrate with $Na_2S_2O_3$ with the redox electrode until the first equivalent point
g. Calculate the amount of peroxide/peracid:

$$\%\text{ Release Peracid/peroxides}=\frac{V\cdot N\cdot M_w}{G\cdot 20}$$

wherein V is the measured volumen in mL, N is the normality of the sodium thiosulfate solution, Mw the molecular weight of the preformed peracid or the hydrogen peroxide source and G the grams, based on 100% purity, of preformed peracid or hydrogen peroxide source weight for the titration

2. In situ formed peracids (in situ reaction of hydrogen peroxide and a bleach activator)

a. Weigh x grams of sample in order to have between 0.05 and 0.40 grams of pure material.
b. Add 50 mL of percarbonate solution
c. Stir for 10 minutes (to enable peracid formation)
d. Add 0.5 mL of Catalase
e. Stir for at least 1 minute (maximum 5 minutes)\
f. Add 10 mL of acetic acid
g. Add 4 mL KI solution
h. Titrate with $Na_2S_2O_3$ with the redox electrode until the first equivalent point
i. Calculate the amount of peracid:

$$\%\text{Release Peracid}=\frac{V\cdot N\cdot M_w}{G\cdot 20}$$

wherein V is the measured volumen in mL, N is the normality of the sodium thiosulfate solution, Mw the molecular weight of the bleach activator and G the grams, based on 100% purity, of the bleach activator weight for the titration

B. Analytical test for metal catalysts: Photometric method

The activity of the bleach catalyst is measured by means of a colorimetric reaction with a specific dye.
a. Preparation of a calibration curve: Add 40 μL of a 10.000 ppm detergent solution like the ones described in examples 7, 8 and 9, without particles containing X ppm of the metal catalyst in deionized water to 150 μL of Chicago sky blue reagent and incubate at 37°C for 3 minutes (see table below). After incubation an absorbance measure of the solution of detergent and dye is made at 600nm (Abs 1). Add 60 μL of the hydrogen peroxide reagent to the solution and incubate at 37°C for 30 minutes. Measure the absorbance of this solution at 600 nm after incubation (Abs 2). Repeat this with different levels of metal catalyst according to following table:

| Sample | X ppm metal catalyst | Abs 1 | Abs 2 | ABS=Abs 1 - Abs 2 |
|---|---|---|---|---|
| 0 | 0 | | | |
| 1 | 0.05 | | | |
| 2 | 0.10 | | | |

(continued)

| Sample | X ppm metal catalyst | Abs 1 | Abs 2 | ABS=Abs 1 - Abs 2 |
|---|---|---|---|---|
| 3 | 0.20 | | | |
| 4 | 0.30 | | | |
| 5 | 0.40 | | | |
| 6 | 0.50 | | | |
| 7 | 0.60 | | | |
| 8 | 0.80 | | | |
| 9 | 1.00 | | | |
| 10 | 1.25 | | | |
| 11 | 1.50 | | | |
| 12 | 1.75 | | | |
| 13 | 2.00 | | | |
| 14 | 2.50 | | | |
| 15 | 3.00 | | | |

Subtract the initial measured absorbance (Abs 1) from the final (Abs 2) and plot a calibration curve (polynomial fit).
b. Measure 40 μL of the sampled wash solution and determined the concentration of metal catalyst in the wash by using the calibration curve.
c. Determine the percentage of release:

$$\%Release=\frac{C_{wash}}{C_{total}}x100$$

wherein $C_{wash}$ is the concentration determined in the wash in ppm and $C_{total}$ is the total amount of metal catalyst in the wash in ppm (total encapsulated).

C. Analytical test for non-metal catalysts: Isoquinolinium class materials and the activated intermediate can be measured by mass spectrometry. Depending upon the response of the individual molecule, electrospray mass spectrometry operated in positive or negative ion is used to measure the isoquinolinium and the oxized intermediate. MS analysis is done cither by direct infusion or by injecting discrete amounts of diluted sample (flow injection analysis). No HPLC separation is needed.

a. Eluens: acetonitrile:water (1/1) + 1mmol ammonium acetate.
b. Instrument settings are optimized for individual molecules to obtain maximum response.
c. Subsequent measurements are done either in selective ion mode or multiple reaction monitoring.
d. Samples are diluted in acetonitrile/water 1/1 + 1mmol ammonium acetate. Dilution factor depends upon concentration of the isoquinolinium.
e. MS setup: electrospray in either positive or negative ion mode. When full scan acquisition is desired, both scan modes are alternated.

Percentage of release is calculated using the same formula as described above for metal catalysts.

D. Analytical test for diacyl peroxides: Diacyl peroxides are measured by means of HPLC separation followed by electrochemical detection. A short chain RP column is used for the separation, 5 μm, 250 mm*4.6 mm. A typical eluent is water/acetonitrile (250 mL/850 mL) with 0.0025 M ammonium dihydrogen phosphate. The flow rate is set up to 1.0 mL/min and the detection is done by DC amperometry or colometry. Samples are diluted in a mixture of acetonitrile and acetic acid glacial in a ratio of 90% acetonitrile and 10% acetic acid glacial prior to analysis. Percentage of release is calculated using the same formula as described above for metal catalysts
E. Enzyme release may be measured using ASTM method D0348-89 (2003).

(6) Water Solubility Test

Water solubility may be measured using ASTM method E1148-02(2008)

(7) Solid Particle Size Test

Solid, water soluble benefit agent particle size may be measured using ASTM method E2651 - 10

EXAMPLES

While particular embodiments of the present invention have been illustrated and described, it would be obvious to those skilled in the art that various other changes and modifications can be made without departing from the scope of the invention. It is therefore intended to cover in the appended claims all such changes and modifications that are within the scope of this invention.

Example 1 Masking an Encapsulate By Interfacial Polymerization

Preparation core: 40 grams of a suspension formed by a solid, water soluble manganese complex, such as of meso-5,5,7,12,12,14-hexamethyl-1,4,8,11-tetraazacyclotetradecane and racemic-5,5,7,12,12,14-hexamethyl-1,4,8,11-tetraazacyclotetradecane ligands (with 99% of the particles having a particle size of 3.65microns), a polysiloxane (60,000 centistokes) and a hydrophobic organic composition formulated with materials listed in Tables 1 to 10 is cooled to 25 °C and mixed with 4.482 grams Trimesoyl Chloride (Sigma Aldrich. This mixture is kept at 25 °C. Preparation solution 1: 2 grams of polyvinyl alcohol 87-89% hydrolyzed Mw 13000 (Sigma-Aldrich) are dissolved and mixed in 198 grams deionized water. This solution is cooled to 25 °C. Preparation solution 2: 8.598 grams Diethylenetriamine (Sigma-Aldrich) are mixed with 10 grams deionized water. This solution is cooled to 25 °C.

Process: the core is added to the solution 1 at a rate of 5 grams per minute under mechanical agitation in a thermostatic reactor with temperature control - temperature set point 25 °C during all the process-. After mixing under a stable emulsion is obtained (10 min at 1400 rpm), we add solution 2 to the emulsion at a rate of 1 gram per minute under continuous stirring at 500 rpm for 15 minutes. After addition is completed, we stir the mixture at 300 rpm for 3hours till complete encapsulation.

In order to eliminate the excess of amine, capsules are centrifuged and aqueous phase is removed and substituted by deionized water.

Examples 2 Making an Encapsulate By Thermally Induced Phase Separation

Preparation core: 70 grams of a suspension formed by a solid, water soluble manganese complex, such as of meso-5,5,7,12,12,14-hexamethyl-1,4,8,11-tetraazacyclotetradecane and racemic-5,5,7,12,12,14-hexamethyl-1,4,8,11-tetraazacyclotetradecane ligands (with 99% of the particles having a particle size of 3.65microns), a polysiloxane (60,000 centistokes) and a hydrophobic organic composition formulated with materials listed in Tables 1 to 10 is mixed with 0.66 grams PEG 300 (Sigma Aldrich) and 2 grams Ethyl lactate (Sigma-Aldrich). This mixture is kept at 5 °C.

Preparation solution 1: 1.8 grams of polyvinyl alcohol Elvanol® 70-75 (DuPont) are dissolved in 148.2 grams deionized water at 60°C. This solution is cooled to 5 °C.

Preparation solution 2: 1.87 grams Hydroxypropyl methyl cellulose (Sigma-Aldrich) are dissolved in 60 grams deionized water. This solution is kept at 5 °C till hydroxypropyl methyl cellulose is completely dissolved.

Process: we mix solution 1 and solution 2 at 5 °C and add the core to this mixture under mechanical agitation in a thermostatic reactor with temperature control - temperature set point 5 °C during emulsification step-. After mixing under a stable emulsion is obtained (10 min at 1400ppm), we increase the temperature to 55 °C at a rate of 0.4C per minute and maintain this temperature for 3 hours. Then, we stop the stirring and maintain the encapsulate at 55 °C for 12h. Encapsulate is separated by filtration.

Example 3 Making an Encapsulate By Spray-driving

A 10% solution of HPMCP, grade 50 ("HP 50") (available from SEPPIC SA, 7 Boulevard Franck Kupka, 92039 Paris La Defense, Cedex, France) in a 5% sodium bicarbonate aqueous solution is prepared at 50°C and filtered with a 1.2 micron filter (Albet, Dassel, Germany). The solution is cooled to room temperature. 10 grams of SPAN 80 (Sigma-aldrich) is added to the solution. 100 grams of a suspension formed by a solid, water soluble manganese complex, such as of meso-5.5,7,12,12,14-hexamethyl-1,4,8,11-tetraazacyclotetradecane and racemic-5,5,7,12,12,14-hexamethyl-1,4,8,11-tetraazacyclotetradecane ligands, a polysiloxane (30,000 centistokes) and a hydrophobic organic composition

formulated with materials listed in Tables 1 to 10, is added to the previous mixture under mechanical agitation. After mixing until a stable emulsion is obtained a spray-dryer is then used to collect the particles (4M8 Spray-Dryer from ProCepT, Belgium). Parameters used in the spray-drying process are as follows: nozzle 0.4mm; schuin 60 cyclone; temperature inlet air 140°C; air flow 0.4 m3/min; feeding speed 2 mL/min with syringe. An average capsule size of 20um is obtained as analyzed by a Model 780 Accusizer.

Example 4 Making an Encapsulate By Solvent Evaporation

100 grams of a suspension formed by a solid, water soluble manganese complex, such as of meso-5,5,7,12,12,14-hexamethyl-1,4,8,11-tetraazacyclotetradecane and racemic-5,5,7,12,12,14-hexamelhyl-1,4,8,11-tetraazacyclotetradecane ligands, a polysiloxane (15,000 centistokes) and a hydrophobic volatile organic solvent -methylene chloride- is mixed with 10g poly(styrene-co-methyl methacrylate). This mixture is added to an aqueous solution with 5% polyvinyl alcohol as surfactant under mechanical agitation. We close the reactor and apply vacuum while stirring till solvent has been evaporated and particles are formed. An average capsule size of 75um is obtained as analyzed by a Model 780 Accusizer.

Example 5: Liquid Laundry Formulations (HDLs)

Non-limiting examples of product formulations containing an encapsulated solid water soluble benefit agent summarized in the following table

| Ingredient | HDL1 | HDL2 | HDL3 | HDL4 | HDL5 | HDL 6 |
|---|---|---|---|---|---|---|
| Alkyl Ether Sulphate | 0.00 | 0.50 | 12.0 | 12.0 | 6.0 | 7.0 |
| Dodecyl Benzene Sulphonic Acid | 8.0 | 8.0 | 1.0 | 1.0 | 2.0 | 3.0 |
| Ethoxylated Alcohol | 8.0 | 6.0 | 5.0 | 7.0 | 5.0 | 3.0 |
| Citric Acid | 5.0 | 3.0 | 3.0 | 5.0 | 2.0 | 3.0 |
| Fatty Acid | 3.0 | 5.0 | 5.0 | 3.0 | 6.0 | 5.0 |
| Ethoxysulfated hexamethylene diamine quaternized | 1.9 | 1.2 | 1.5 | 2.0 | 1.0 | 1.0 |
| Diethylene triamine penta methylene phosphonic acid | 0.3 | 0.2 | 0.2 | 0.3 | 0.1 | 0.2 |
| Enzymes | 1.20 | 0 | 0 | 0 | 1.2 | 0 |
| Brightener (disulphonated diamino stilbene based FWA) | 0.14 | 0.09 | 0 | 0.14 | 0.01 | 0.09 |
| Cationic hydroxyethyl cellulose | 0 | 0 | 0.10 | 0 | 0.200 | 0.30 |
| Poly(acrylamide-co-diallyldimethylammonium chloride) | 0 | 0 | 0 | 0.50 | 0.10 | 0 |
| Thickener*** | 0.50 | 0.44 | 0.2 | 0.2 | 0.3 | 0.3 |
| Boric acid | 2.4 | 0 | 0 | 0 | 1.0 | 0 |
| Ethanol | 0.50 | 1.0 | 2.0 | 0 | 0 | 0 |
| 1, 2 propanediol | 2.0 | 3.0 | 0.01 | 2.0 | 1.0 | 1.0 |
| Glutaraldehyde | 0 | 0 | 19 ppm | 0 | 13 ppm | 0 |
| Dielhyleneglycol (DEG) | 1.6 | 0 | 0 | 0 | 0 | 0 |

(continued)

| Ingredient | HDL1 | HDL2 | HDL3 | HDL4 | HDL5 | HDL 6 |
|---|---|---|---|---|---|---|
| 2,3 - Methyl -1,3-propanediol (M pdiol) | 1.0 | 1.0 | 0 | 0 | 0 | 0 |
| Mono Ethanol Amine | 1.0 | 0.5 | 0 | 0 | 0 | 0 |
| NaOH Sufficient To Provide Formulation pH of: | pH 8 | pH8 | pH8 | pH8 | pH8 | pH8 |
| Sodium Cumene Sulphonate (NaCS) | 2.00 | 0 | 0 | 0 | 0 | 0 |
| Silicone (PDMS) emulsion | 0.003 | 0.003 | 0.003 | 0.003 | 0.003 | 0.003 |
| Perfume composition | 0 | 0 | 0.4 | 0 | 0 | 0.1 |
| Encapsulated solid water soluble benefit agent[a] | | | | 1.3 | 0.9 | 1.2 |
| Encapsulated solid water soluble benefit agent[b] | 0.3 | 0.4 | 0.25 | | | |
| Water | Balance | Balance | Balance | Balance | Balance | Balance |

* One or more materials comprising an amine moiety as disclosed in the present specification.

** Optional.

[a] slurry of encapsulated water soluble manganese complex, such as of meso-5,5,7,12,12,14-hexamethyl-1,4,8,11-tetraazacyclotetradecane and racemic-5,5,7,12,12,14-hexamethyl-1,4,8,11-tetraazacyclotetradecane ligands

[b] encapsulate water soluble manganese complex, such as of meso-5,5,7,12,12,14-hexamethyl-1,4,8,11-tetraazacyclotetradecane and racemic-5,5,7,12,12,14-hexamethyl-1,4,8,11-tetraazacyclotetradecane ligands as solid, like collected from spray-drying.

Example 6: Dry Laundry Formulations

Non-limiting examples of product formulations containing particles of the aforementioned examples are summarized in the following table.

| Component | %w/w granular laundry detergent composition | | | | | | |
|---|---|---|---|---|---|---|---|
| | A | B | C | D | E | F | G |
| Brightener | 0.1 | 0.1 | 0.1 | 0.2 | 0.1 | 0.2 | 0.1 |
| Soap | 0.6 | 0.6 | 0.6 | 0.6 | 0.6 | 0.6 | 0.6 |
| Ethylenediamine disuccinic acid | 0.1 | 0.1 | 0.1 | 0.1 | 0.1 | 0.1 | 0.1 |
| Acrylate/maleate copolymer | 1.5 | 1.5 | 1.5 | 1.5 | 1.5 | 1.5 | 1.5 |
| Hydroxyethane di(methylene phosphonic acid) | 0.4 | 0.4 | 0.4 | 0.4 | 0.4 | 0.4 | 0.4 |
| Mono-$C_{12}$-$C_{14}$ alkyl, di-methyl, mono-hydroyethyl quaternary ammonium chloride | 0.5 | 0.5 | 0.5 | 0.5 | 0.5 | 0.5 | 0.5 |
| Linear alkyl benzene | 0.1 | 0.1 | 0.2 | 0.1 | 0.1 | 0.2 | 0.1 |
| Linear alkyl benzene sulphonate | 10.3 | 11.1 | 19.9 | 14.7 | 10.3 | 17 | 10.5 |
| Magnesium sulphate | 0.4 | 0.4 | 0.4 | 0.4 | 0.4 | 0.4 | 0.4 |
| Sodium carbonate | 19.5 | 19.2 | 9.8 | 18.5 | 29.9 | 10.1 | 16.8 |
| Sodium sulphate | 29.6 | 29.8 | 38.8 | 15.1 | 23.9 | 19.5 | 19.1 |
| Sodium Chloride | 0.1 | 0.1 | 0.1 | 0.1 | 0.1 | 0.1 | 0.1 |
| Zeolite | 9.6 | 9.4 | 7.5 | 18 | 10 | 13.2 | 17.3 |

(continued)

| Component | %w/w granular laundry detergent composition | | | | | | |
|---|---|---|---|---|---|---|---|
| | A | B | C | D | E | F | G |
| Photobleach particle | 0.1 | 0.1 | 0.2 | 0.1 | 0.2 | 0.1 | 0.2 |
| Blue and red carbonate speckles | 1.8 | 1.8 | 1.8 | 1.8 | 1.8 | 1.8 | 1.8 |
| Ethoxylated Alcohol AE7 | 1 | 1 | 1 | 1 | 1 | 1 | 1 |
| Tetraacetyl ethylene diamine agglomerate (92wt% active) | 0.9 | 0.9 | 0.9 | 0.9 | 0.9 | 0.9 | 0.9 |
| Citric acid | 1.4 | 1.4 | 1.4 | 1.4 | 1.4 | 1.4 | 1.4 |
| PDMS/clay agglomerates (9.5% wt% active PDMS) | 10.5 | 10.3 | 5 | 15 | 5.1 | 7.3 | 10.2 |
| Polyethylene oxide | 0.2 | 0.2 | 0.2 | 0.2 | 0.2 | 0.2 | 0.2 |
| Enzymes e.g. Protease (84mg/g active), Amylase (22mg/g active) | 0.2 | 0.3 | 0.2 | 0.1 | 0.2 | 0.1 | 0.2 |
| Suds suppressor agglomerate (12.4 wt% active) | 0.2 | 0.2 | 0.2 | 0.2 | 0.2 | 0.2 | 0.2 |
| Sodium percarbonate (having from 12% to 15% active AvOx) | 7.2 | 7.1 | 4.9 | 5.4 | 6.9 | 19.3 | 13.1 |
| Perfume oil | 0.5 | 0.5 | 0.5 | 0.5 | 0.5 | 0.5 | 0.5 |
| Solid perfume particles | 0.6 | 0.4 | 0 | 0.4 | 0.4 | 0.4 | 0.5 |
| Particle * | 0.3 | 0.1 | 2.4 | 1.3 | 1.8 | 1.5 | 0.8 |
| Water | 1.4 | 1.4 | 1.4 | 1.4 | 1.4 | 1.4 | 1.4 |
| Misc | 0.9 | 1.0 | 0.0 | 0.1 | 0.1 | 0.1 | 0.1 |
| Total Parts | 100 | 100 | 100 | 100 | 100 | 100 | 100 |
| *Particles like the ones made in example 3 | | | | | | | |

Example 7: Liquid Unit Dose

The following are examples of unit dose executions wherein the liquid composition is enclosed within a PVA film. The preferred film used in the present examples is Monosol M8630 76μm thickness.

| | D | | | E | | F | | |
|---|---|---|---|---|---|---|---|---|
| | 3 compartments | | | 2 compartments | | 3 compartments | | |
| Compartment # | 42 | 43 | 44 | 45 | 46 | 47 | 48 | 49 |
| **Dosage (g)** | **34.0** | **3.5** | **3.5** | **30.0** | **5.0** | **25.0** | **1.5** | **4.0** |
| Ingredients | Weight % | | | | | | | |
| Alkylbenzene sulfonic acid | 20.0 | 20.0 | 20.0 | 10.0 | 20.0 | 20.0 | 25 | 30 |
| Alkyl sulfate | | | | 2.0 | | | | |
| $C_{12-14}$ alkyl 7-ethoxylate | 17.0 | 17.0 | 17.0 | | 17.0 | 17.0 | 15 | 10 |
| $C_{12-14}$ alkyl ethoxy 3 sulfate | 7.5 | 7.5 | 7.5 | | | 7.5 | 7.5 | |
| Citric acid | 0.5 | | 2.0 | 1.0 | | | | 2.0 |
| Zeolite A | | | | 10.0 | | | | |
| $C_{12-18}$ Fatty acid | 13.0 | 13.0 | 13.0 | | 18.0 | 18.0 | 10 | 15 |
| Sodium citrate | | | | 4.0 | 2.5 | | | |
| enzymes | 0-3 | 0-3 | 0-3 | 0-3 | | 0-3 | 0-3 | 0-3 |

(continued)

| | D | | | E | | F | | |
|---|---|---|---|---|---|---|---|---|
| | 3 compartments | | | 2 compartments | | 3 compartments | | |
| Sodium Percarbonate | | | | 11.0 | | | | |
| TAED | | | | 4.0 | | | | |
| Polycarboxylate | | | | 1.0 | | | | |
| Ethoxylated Polyethylenimine[1] | 2.2 | 2.2 | 2.2 | | | | | |
| Hydroxyethane diphosphonic acid | 0.6 | 0.6 | 0.6 | 0.5 | | | 2.2 | |
| Ethylene diamine tetra (methylene phosphonic) acid | | | | | | 0.4 | | |
| Brightener | 0.2 | 0.2 | 0.2 | 0.3 | | 0.3 | | |
| Particles[2] | 1.0 | 0.1 | 0.1 | 1.2 | 0 | 0 | 0.4 | 0.4 |
| Water | 9 | 8.5 | 10 | 5 | 11 | 10 | 10 | 9 |
| $CaCl_2$ | | | | | | | 0.01 | |
| Perfume | 1.7 | 1.7 | | 0.6 | | 1.5 | 0.5 | |
| Minors (antioxidant, | 2.0 | 2.0 | 2.0 | 4.0 | 1.5 | 2.2 | 2.2 | 2.0 |
| sulfite, aesthetics,...) | | | | | | | | |
| Buffers (sodium carbonate, monoethanolamine)[3] | To pH 8.0 for liquids To RA > 5.0 for powders | | | | | | | |
| Solvents (1,2 propanediol, ethanol), Sulfate | To 100p | | | | | | | |

[1] Polyethylenimine (MW = 600) with 20 ethoxylate groups per -NH.

[3] RA = Reserve Alkalinity (g NaOH/dose)

[2]Particles added as 0.1-5% active slurry of encapsulated water soluble manganese complex, such as of meso-5,5,7,12,12,14-hexamethyl-1,4,8,11-tetraazacyclotetradecane and racemic-5,5,7,12.12,14-hexamethyl-1,4,8,11-tetraazacyclotetradecane ligands

Example 8: Making a PVOH Encapsulate with Sodium Persulfate

A 15.5% polyvinyl alcohol solution is prepared by adding 593.02 grams of deionized water to a water jacketed vessel set to 80°C. The water is stirred with a paddle mixer while 108.4 grams of granular Acetic Acid Ethenyl Ester, polymer with Ethenol (Celvol 523, Partially Hydrolyzed, (Cclanese Ltd. Dallas, Texas U.S.A.)) is added slowly over one minute. The granules are allowed to mix and cook at this temperature for 30 minutes before being removed and cooled to room temperature.

47.85 grams of the cooked 15.5% 523 polyvinyl alcohol solution is added to a 1 kg reactor to which is previously added 210.58 grams distilled water. The mixture is stirred with a 2 inch diameter, 4 point star blade mixer for a period of 5 minutes at 425 RPM. 200.18 grams of a suspension formed by a solid, water soluble manganese complex, such as of meso-5,5,7,12,12,14-hexamethyl-1,4,8,11-tetraazacyclotetradecane and racemic-5,5,7,12,12,14-hexamethyl-1,4,8,11-tetraazacyclotetradecane ligands, a polysiloxane (60,000 centistokes) and a hydrophobic organic composition formulated with materials listed in Tables 1 to 10, is added to the previous mixture under mechanical agitation. The mixture is milled with the same flat 4 point star blade, 2 inches in diameter at 1500 rpm for a period of 4 minutes to achieve a stable emulsion with a desired particle size.

After milling, the star mixer is changed to a paddle mixer and the slurry is allowed to mix at 700 RPM while, 3.87 grams of Potassium Persulfate (CAS 7727-21-1) is added slowly over a period of 30 seconds and allowed to finish mixing for another 40 minutes at 700 RPM. An average capsule size of 14.2 microns is obtained and analyzed by the method described above.

The total time for the preparation of the Celvol 523 solution is approximately 40 minutes. The microencapsulation procedure can occur at room temperature or elevated temperatures up to 85°C in about 20 minutes.

Example 9: Aliphatic Polyurea Encapsulate

A 12.5% polyvinyl alcohol solution is prepared by adding 612.89 grams of deionized water to a water jacketed vessel set to 80°C. The water is stirred with a paddle mixer while 87.52 grams of granular Acetic Acid Ethenyl Ester, polymer with Ethenol (Celvol 523, Partially Hydrolyzed, (Celanese Ltd. Dallas, Texas U.S.A.)) is added slowly over one minute. The granules are allowed to mix and cook at this temperature for 30 minutes before being removed and cooled to room temperature.

An amine solution is prepared by adding 3.66 grams of tetraethylenepentamine (TEPA, (The Dow Chemical Company Midland, Michigan U.S.A.)) and 25.65 grams of deionized water to a beaker with magnetic stir bar. The solution is allowed to stir under mild mixing for 15 minutes and set aside until needed.

47.51 grams of the cooked 12.5% 523 polyvinyl alcohol solution are added to a 38°C 1 kg reactor to which is previously added 166.25 grams distilled water. The mixture is stirred with a 2 inch diameter, 4 point star blade mixer for a period of 5 minutes at 600 RPM. 185.01 grams of a suspension formed by 28.5 grams of Hexamethylene-1,6-Diisocyanate (N3400, 21.9 % NCO, (Bayer MaterialScience Pittsburgh, Pennsylvania U.S.A.)) and 156.51 grams of a solid, water soluble manganese complex, such as of meso-5,5,7,12,12,14-hexamethyl-1,4,8,11-tetraazacyclotetradecane and racemic-5,5,7,12,12,14-hexamethyl-1,4,8,11-tetraazacyclotetradecane ligands, a polysiloxane (60,000 centistokes) and a hydrophobic organic composition formulated with materials listed in Tables 1 to 10, is added to the previous mixture under mechanical agitation. The mixture is milled with the same flat 4 point star blade, 2 inches in diameter at 38°C 2000 rpm for 10 minutes forming a stable emulsion with desired particle size.

The flat 4-point star mixer is changed to a paddle mixer and the RPM set to 450. The TEPA solution is added drop-wise over 8 minutes at 38°C. The mixture is then heated to 52°C and kept here for at least 5 minutes, preferable, 2,4, 6, or even 24 hours with stirring to complete the encapsulation. The average particle size is 30 microns as analyzed by the method described in the test method section of this specification.

Example 10: Aromatic Polyurea Encapsulate

A 12.5% polyvinyl alcohol solution is prepared by adding 612.89 grams of deionized water to a water jacketed vessel set to 80°C. The water is stirred with a paddle mixer while 87.52 grams of granular Acetic Aicd Ethenyl Ester, polymer with Ethenol (Celvol 523, Partially Hydrolyzed, (Celanese Ltd. Dallas, Texas U.S.A.)) is added slowly over one minute. The granules are allowed to mix and cook at this temperature for 30 minutes before being removed and cooled to room temperature.

An amine solution is prepared by adding 5.24 grams of tetraethylenepentamine (TEPA, (The Dow Chemical Company Midland, Michigan U.S.A.)) and 25.65 grams of deionized water to a beaker with magnetic stir bar. The solution is allowed to stir under mild mixing for 15 minutes and set aside until needed.

60.3 grams of the cooked 12.5% 523 polyvinyl alcohol solution are added to a 45°C 1 kg reactor to which is previously added 190.15 grams distilled water. The mixture is stirred with a 5.08cm (2 inch) diameter, 4 point star blade mixer for a period of 5 minutes at 600 RPM. 221.35 grams of a suspension formed by 30.21 grams of Diphenylmethane Diisocyanate, isomers and homologues 4,4'-Methylenediphenyl diisocyanate (PAPI27, 31.4 % NCO, (The Dow Chemical Company Midland, Michigan U.S.A.) and 191.14 grams of a solid, water soluble manganese complex, such as of meso-5,5,7,12,12,14-hexamethyl-1,4,8,11-tetraazacyclotetradecane and racemic-5,5,7,12,12,14-hcxamethyl-1,4,8,11-tetraazacyclotetradecane ligands, a polysiloxane (60,000 centistokes) and a hydrophobic organic composition formulated with materials listed in Tables 1 to 10, is added to the previous mixture under mechanical agitation. The mixture is milled with the same that 4 point star blade, 2 inches in diameter at 45°C 2500 ppm for 15 minutes to form a stable emulsion with desired particle size.

The flat 4-point star mixer is changed to a paddle mixer and the RPM set to 450. The TEPA solution is added drop-wise over 5 minutes at 45°C. The mixture is then heated to 65°C and kept here for at least 2 minutes, preferable, 2,4, 6, or even 24 hours with stirring to complete the encapsulation. The average particle size is 10 microns as analyzed by the method described in the test method section of this specification.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm".

The citation of any document cited in the Detailed Description of the Invention is not to be construed as an admission that it is prior art with respect to the present invention. To the extent that any meaning or definition of a term in this document conflicts with any meaning or definition of the same term in a document incorporated by reference, the meaning or definition assigned to that term in this document shall govern.

While particular embodiments of the present invention have been illustrated and described, it would be obvious to those skilled in the art that various other changes and modifications can be made without departing from the scope

of the invention. It is therefore intended to cover in the appended claims all such changes and modifications that are within the scope of this invention.

## Claims

1. A consumer product comprising a particle, said particle comprising:

a) a shell material, said shell material comprising a material selected from:

(i) a material comprising polyvinyl pyrrolidone;
(ii) polymers derived from hydrophilic monomers comprising diamines, triamines, diols and mixtures thereof;
(iii) polymers derived from hydrophobic monomers comprising diacyl chlorides, diisocyanates, bischloroformates and mixtures thereof;
(iv) a material comprising a polyvinyl alcohol derivative;
(v) a material comprising an acrylate derivative; and
(vii) a material comprising a cellulosic polymer; and

b) a core material, said core material comprising:

(i) a protective suspension agent comprising an organosilicone, said organosilicone being linear, branched and/or crosslinked and having a viscosity at 25°C of from 500 centistokes to 2,000,000 centistokes, preferably from 1000 centistokes to 800,000 centistokes, more preferably from 1000 centistokes to 300,000 centistokes, said core material preferably comprising, based total core weight, from 0.1% to 99%, more preferably from 1% to 95%, more preferably from 1% to 80%, most preferably from 5% to 50% of said protective suspension agent;
(ii) a solid, water soluble benefit agent, said core material preferably comprising, based total core weight, from 0.01% to 80%, more preferably from 0.1 % to 50%, more preferably from 1% to 25%, most preferably from 1% to 10% of said solid, water soluble benefit agent, wherein said solid, water soluble benefit agent comprises a material selected from the group consisting of a metal catalyst, a non-metal catalyst, an activator, a pre-formed peroxy carboxylic acid, a diacyl peroxide, a hydrogen peroxide source, an enzyme and mixtures thereof, and
(iii) an optional hydrophobic organic material preferably comprising a material having a ClogP from 1.5 to 10, more preferably from 1.5 to 6, more preferably from 2 to 5, most preferably from 2.2 to 4.5, said core material preferably comprising, based total core weight, from 0.1% to 99%, more preferably from 1% to 95%, more preferably from 1% to 80%, most preferably from 5% to 80% of said hydrophobic organic material;
said shell material encapsulating said core material, said particle preferably comprising, based total particle weight, from 1% to 95%, more preferably from 1% to 95%, more preferably from 5% to 80%, most preferably from 5% to 50% of said core material, said consumer product preferably comprising, based total consumer product weight, from 0.01% to 80%, more preferably from 0.1% to 50%, more preferably from 1% to 25%, most preferably from 1% to 10% of said particle, and said consumer product preferably comprising, based total consumer product weight, from 1% to 85%, more preferably from 3% to 60%, more preferably from 5% to 40%, most preferably from 5% to 20% total water.

2. A consumer product according to any preceding claim, wherein:

a) said metal catalyst comprises a material selected from the group consisting of dichloro-1,4-diethyl-1,4,8,11-tetraaazabicyclo[6.6.2]hexadecane manganese(II); dichloro-1,4-dimethyl-1,4,8,11-tetraaazabicyclo[6.6.2]hexadecane manganese(II) and mixtures thereof;
b) said non- metal catalyst comprises material selected from the group consisting of 2-[3-[(2-hexyldodecyl)oxy]-2-(sulfooxy)propyl]-3,4-dihydroisoquinolinium, inner salt; 3,4-dihydro-2-[3-[(2-pentylundecyl)oxy]-2-(sulfooxy)propyl]isoquinolinium, inner salt; 2-[3-[(2-butyldecyl)oxy]-2-(sulfooxy)propyl]-3,4-dihydroisoquinolinium, inner salt; 3,4-dihydro-2-[3-(octadecyloxy)-2-(sulfooxy)propyl]isoquinolinium, inner salt; 2-[3-(hexadecyloxy)-2-(sulfooxy)propyl]-3,4-dihydroisoquinolinium, inner salt; 3,4-dihydro-2-[2-(sulfooxy)-3-(tetradecyloxy)propyl]isoquinolinium, inner salt; 2-[3-(dodecyloxy)-2-(sulfooxy)propyl]-3,4-dihydroisoquinolinium, inner salt; 2-[3-[(3-hexyldecyl)oxy]-2-(sulfooxy)propyl]-3,4-dihydroisoquinolinium, inner salt; 3,4-dihydro-2-[3-[(2-pentylnonyl)oxy]-2-(sulfooxy)propyl]isoquinolinium, inner salt; 3,4-dihydrn-2-[3-[(2-propylheptyl)oxy]-2-(sulfooxy)propyl]isoquinolinium, inner salt; 2-[3-[(2-butyloctyl)oxy]-2-(sulfooxy)propyl]-3,4-dihydroisoquinolinium, inner salt;

2-[3-(decyloxy)-2-(sulfooxy)propyl]-3,4-dihydroisoquinolinium, inner salt; 3,4-dihydro-2-[3-(octyloxy)-2-(sulfaoxy)propyl]isoquinolinium, inner salt; 2-[3-[(2-ethylhexyl)oxy]-2-(sulfooxy)propyl]-3,4-dihydroisoquinolinium, inner salt and mixtures thereof;

c) said bleach activator comprises a material selected from the group consisting of tetraacetyl ethylene diamine (TAED); benzoylcaprolactam (BzCL); 4-nitrobenzoylcaprolactam; 3-chlorobenzoylcaprolactam; benzoyloxybenzenesulphonate (BOBS); nonanoyloxybenzene-sulphonate (NOBS); phenyl benzoate (PhBz); decanoyloxybenzenesulphonate ($C_{10}$-OBS); benzoylvalerolactam (BZVL); octanoyloxybenzenesulphonate ($C_8$-OBS); perhydrolyzable esters; 4-[N-(nonaoyl) amino hexanoyloxy]-benzene sulfonate sodium salt (NACA-OBS); dodecanoyloxybenzenesulphonate (LOBS or $C_{12}$-OBS); 10-undecenoyloxybenzenesulfonate (UDOBS or $C_{11}$-OBS with unsaturation in the 10 position); decanoyloxybenzoic acid (DOBA); (6-octanamidocaproyl)oxybenzenesulfonate; (6-nonanamidocaproyl) oxybenzenesulfonate; (6-decanamidocaproyl)oxybenzenesulfonate and mixtures thereof;

d) said preformed peracid comprises a material selected from the group consisting of peroxymonosulfuric acids; perimidic acids; percabonic acids; percarboxilic acids and salts of said acids; in one aspect said percarboxilic acids and salts thereof may be phthalimidoperoxyhexanoic acid, 1,12-diperoxydodecanedioic acid; or monoperoxyphthalic acid (magnesium salt hexahydrate); amidoperoxyacids, in one aspect, said amidoperoxyacids may be N,N'-terephthaloyl-di(6-aminocaproic acid), a monononylamide of either peroxysuccinic acid (NAPSA) or of peroxyadipic acid (NAPAA), N-nonanoylaminoperoxycaproic acid (NAPCA), and mixtures thereof;

e) said diacyl peroxide comprises a material selected from the group consisting of dinonanoyl peroxide, didecanoyl peroxide, diundecanoyl peroxide, dilauroyl peroxide, dibenzoyl peroxide, di-(3,5,5-trimethyl hexanoyl) peroxide and mixtures thereof;

f) said hydrogen peroxide source comprises a material selected from the group consisting of a perborate, a percarbonate a peroxyhydrate, a peroxide, a persulfate and mixtures thereof; and

g) said enzyme comprises a material selected from the group consisting of peroxidases, proteases, lipases, phospholipases, cellobiohydrolases, cellobiose dehydrogenases, esterases, cutinases, pectinases, mannanases, pectate lyases, keratinases, reductases, oxidases, phenoloxidases, lipoxygenases, ligninases, pullulanases, tannases, pentosanases, glucanases, arabinosidases, hyaluronidase, chondroitinase, laccases, amylases, and mixtures thereof.

**3.** A consumer product according to any preceding claim, wherein said organosilicone comprises a material selected from the group consisting of non-functionalized siloxane polymers, functionalized siloxane polymers and mixtures thereof, said functionalized siloxane polymers preferably comprising an aminosilicone.

**4.** A consumer product according to any preceding claim, wherein said hydrophobic organic material comprises a material selected from the group consisting of an aliphatic hydrophobic organic material; an aromatic hydrophobic organic material and mixtures thereof.

**5.** A consumer product according to any preceding claim, wherein said hydrophobic organic material comprises a material selected from the group consisting of a carboxylic acid, an ester, an alcohol, a fatty acid, a natural oil, a synthetic oil, an aldehyde, a ketone, a nitrile, a hydrocarbon, an ether, an acetal, a Schiff Base, a wax and mixtures thereof.

**6.** A consumer product according to claim 5, wherein;

a) said alcohol comprises a material selected from Lauryl alcohol, Citronellol, Alpha-terpineol, 2-tert-butylcyclohexanol, 2,6-dimethyl-2-octanol, 3,7-dimethyl-3-octanol and 2,6-dimethyl-2-octanol, 2-methyl-4-(2,2,3-trimethyl-3-cyclopentenyl)-2-buten-1-ol, linalool, Tetrahydrolinalool and mixtures thereof;

b) said ester comprises a material selected from Methyl laurate, Methyl jasmonate, Hexyl isovalerate, Geranyl acetate, 1,4-dioxacyclohexadecane-5,16-dione, 4-tert-butylcyclohexyl acetate, 3,5,5-trimethylhexyl acetate, Ethyl-2-methylpentanoate, Ethyl Methyl-2-Butyrate, Isopropyl myristate and mixtures thereof;

c) said ether comprises a material selected from (3z)-1-[(2-methyl-2-propenyl)oxy]-3-hexene, decahydrospiro[furan-2(3h),5'-[4.7]methano[5h[indene], 4,9,12,12-tetramethyl-5-oxatricyclo[8.2.0.0(4,6)]dodecane, decahydro-2,6,6,7,8,8-hexamethyl-2h-indeno[4,5-b]furan, isomers of decahydro-2,6,6,7,8,8-hexamethyl-2h-indeno[4,5-b]furan, 2-(1-ethylpentyl)-1,3-dioxolane, 2-methyl-1,5-dioxaspiro[5.5]undecane, phenyl ethyl cyclohexyl ether and mixtures thereof;

d) said carboxylic acid comprises a material selected from Lauric acid, Myristic acid, 2,4-dimethoxybenzoic acid, 2,4-dimethyl-2-pentenoic acid, geranic acid, salicylic acid, Cyclohexylacetic acid and mixtures thereof;

e) said nitrile comprises a material selected from Lauryl nitrile, 2-phenyl hexanenitrile, methyl 2-[{(4-(4-hydroxy-4-methylpentyl)-1-cyclohexenyl)methylene}amino}benzoate, 2,2,4-trimethyl-4-phenyl-butanenitrile, 3,7-dimethyloctanenitrile, (e)-3-phenyl-2-propenenitrile, 3,7-dimethyl-6-octenenitrile and mixtures thereof;
f) said amine comprises a material selected from 4-(4,8-dimethyl-3,7-nonadienyl) pyridine, (2-methylpropyl)-quinoline and mixtures thereof;
g) said ketone comprises a material selected from Dihydrojasmone, Methyl-beta-ionone, Methyl heptenone, 6,10-dimethylundecen-2-one, 1,3,4,6,7,8a-hexahydro-1.1,5,5-tetramethyl-2h-2,4a-methanonaphthalen-8(5h)-one, 5-Cyclohexadecen-1-one, Ionone and mixtures thereof;
h) said aldehyde comprises a material selected from Lauric aldehyde, Amyl Cinnamic Aldehyde, 3,6(and 4,6)-dimetttylcyclohex-3-ene-1-carboxaldehyde, 2,4-dimethyl-3-cyclohexene-1-carboxaldehyde, 1-methyl-4-(4-methyl-3-pentenyl)cyclohex-3-ene-1-carboxaldehyde, 3-(and 4-)(4-methyl-3-pnetyl)cyclohex-3-ene-1-carboxaldehyde, ((3,7,-dimethyl-6-octenyl)oxy)acetaldehyde and mixtures thereof;
i) said hydrocarbon comprises a material selected from isolongifolene, Limonene, Terpinolene, 3,7-dimethyl-1,3,6-octatriene, Bisabolene Alpha-pinene and mixtures thereof;
j) said Schiff base comprises a material selected from Methyl anthranilate/citronellal Schiff Base, Isononylaidehyde/methylanffiranilate Schiff Base, Methyl N-(3,7-dimethyl-7-hydroxyoctylidene)-anthranilate Schiff Base and mixtures thereof;
k) said waxes comprises a material selected from the group consisting of carnauba wax, beeswax, paraffin, petrolatum, polytetrafluoroethylene wax, and mixtures thereof;
l) said natural and/or synthetic oils comprise a material selected from the group consisting of lavender oil, cedarwood oil, vegetal oil, brominated oil, eucalyptol oil, Ylang Ylang oil, patchouli oil, bergamot oil and mixtures thereof.

**7.** A consumer product according to any preceding claim having a benefit agent release of at least 10%, preferably at least 25%, more preferably at least 35%, more preferably from 50% to 100%, more preferably from 65% to 95%, most preferably from 85% to 95% of said benefit agent after 10 minutes, preferably 8 minutes, more preferably 5 minutes of use of such consumer product containing said particles.

**8.** A consumer product according to any preceding claim, wherein at least 75%, preferably 85%, more preferably 90%, of said particles have a particle size of from 1 micron to 120 microns.

**9.** A consumer product according to any preceding claim, wherein at least 75%, preferably 85%, more preferably 90%, of said particles have a particle wall thickness of from 30 nm to 500 nm, preferably from 40 nm to 250 nm, more preferably from 50 nm to 150 nm.

**10.** A consumer product according to any preceding claim, said consumer product comprising a material selected from the group consisting of a scavenger, a structurant, an anti-agglomeration agent and mixtures thereof.

**11.** A method of treating and/or cleaning a situs, said method comprising

a) optionally washing and/or rinsing said situs;
b) contacting said situs with a consumer product according to any preceding claim; and
c) optionally washing and/or rinsing said situs.

**12.** A process of making a consumer product comprising a consumer product adjunct material and a particle, said process comprising:

a) preparing a core material comprising a solid, water soluble benefit agent, a protective suspension agent having a viscosity at 25°C of from 500 centistokes to 2,000,000 centistokes, preferably from 1000 centistokes to 800,000 centistokes, more preferably from 1000 centistokes to 300,000 centistokes, preferably said protective suspension agent comprises a silicone material having a viscosity of at least 30,000 centistokes, more preferably from 30,000 centistokes to 60,000 centistokes; and an optional hydrophobic organic material and cooling this core material, preferably to a temperature of from 0°C to 25°C;
b) preparing a first solution comprising, based on total solution weight, from 0.1% to 5% of an emulsifier, preferably polyvinyl alcohol, and cooling this first solution, preferably to a temperature of from 0°C to 25°C;
c) preparing a second solution comprising, based on total solution weight, from 65% to 97% core material, and one or more hydrophobic monomers comprising diacyl chlorides, diisocyanates and/or bischloroformates, and cooling this second solution, preferably to a temperature of from 0°C to 25°C;
d) preparing a third solution comprising based on total weight from 10% to 90% water, and one or more hydrophilic

monomers comprising di-amines, triamines and/or diols, and cooling this third solution, preferably to a temperature of from 0°C to 25°C;
e) forming a first composition at a temperature of from 0°C to 25°C, by either combining said second solution and said first solution and emulsifying said first composition; or emulsifying said second solution in said first solution via a micro-device, preferably said micro-device is selected from the group consisting of a cross flow membrane, and/or a flow focusing technology;
f) combining said first composition and said third solution to form a second composition and optionally combining any processing aids and said second composition;
g) stirring said second composition for at least 15 minutes at a temperature of from 0°C to 25°C and optionally combining any processing aids to said second composition;
h) optionally combining any scavenger material, neutralizing agent, structurant, salts and/or anti-agglomeration agent with said second composition during step g) or thereafter,
j) optionally spray drying or agglomerating said second composition; and
k) combining said second composition with one or more consumer product adjuncts.

**13.** A process of making a consumer product, comprising a consumer product adjunct material and a particle, said process comprising:

a) preparing a core material comprising a solid, water soluble benefit agent, a protective suspension agent having a viscosity at 25°C of from 500 centistokes to 2,000,000 centistokes, preferably from 1000 centistokes to 800,000 centistokes, more preferably from 1000 centistokes to 300,000 centistokes, preferably said protective suspension agent comprises a silicone material having a viscosity of at least 30,000 centistokes, more preferably from 30,000 centistokes to 60,000 centistokes and an optional hydrophobic organic, material and cooling this core material, preferably to a temperature of from 0°C to 4°C;
b) preparing a first solution comprising, based on total solution weight, from 0.1% to 10% of a polymer having a cloud point between 0°C and 120°C, more preferably between 20°C and 60°C, preferably said polymer comprises a polyvinyl alcohol derivate; and then said first solution is cooled, preferably to a temperature of from 0°C to 4°C;
c) optionally, lowering the cloud point of the polymer contained in said first solution, preferably by increasing the ionic strength of said solution, preferably by adding salt to said first solution;
d) preparing a second solution comprising, based on total solution weight, from 50% to 70% water, from 5 to 20% of a water miscible, organic solvent, preferably methanol, from 0.1% to 1% of a strong acid, preferably sulfuric acid, from 2% to 10% of a weak acid, preferably acetic acid, and from 15% to 25% of a crosslinking agent, preferably gluteraldehyde;
e) preparing a third solution comprising, based on total third solution weight, from 70% to 99% water, and one or more electrolytes comprising sodium sulphate, sodium phosphate, sodium citrate, sodium carbonate, sodium acetate and mixtures thereof;
f) forming a first composition at temperature of from 0°C to 25°C, by either combining said core material and said first solution and emulsifying said first composition; or emulsifying said core material in said first solution via a micro-device, preferably said micro-device is selected from the group consisting of a cross flow membrane, and/or a flow focusing technology;
g) adding said third solution to said first composition to form a second composition and optionally combining any processing aids and said second composition;
h) increasing the temperature of said second composition at a rate from 0.2°C/min to 5°C/min;
i) mixing said second composition for at least 15 minutes at a temperature from 1°C to 10°C above the cloud point of said second composition;
j) adding said second solution to said second composition to form a third composition and optionally combining any processing aids and said third composition;
k) optionally combining any scavenger material, neutralizing agent, structurant, salts and/or anti-agglomeration agent with said third composition during step j) or thereafter;
l) optionally spray drying or agglomerating said third composition; and
m) combining said third composition with one or more consumer product adjuncts.

## Patentansprüche

**1.** Endprodukt, umfassend ein Teilchen, wobei das Teilchen Folgendes umfasst:

a) ein Umhüllungsmaterial, wobei das Umhüllungsmaterial ein Material umfasst, das ausgewählt ist aus:

(i) einem Material, umfassend Polyvinylpyrrolidon;
(ii) Polymeren, die von hydrophilen Monomeren abgeleitet sind, die Diamine, Triamine, Diole und Mischungen davon umfassen;
(iii) Polymeren, die von hydrophoben Monomeren abgeleitet sind, die Diacylchloride, Diisocyanate, Bischlorformiate und Mischungen davon umfassen;
(iv) einem Material, umfassend ein Polyvinylalkoholderivat;
(v) einem Material, umfassend ein Acrylatderivat; und
(vii) einem Material, umfassend ein cellulosisches Polymer; und

b) einem Kernmaterial, wobei das Kernmaterial Folgendes umfasst:

(i) ein schützendes Suspensionsmittel, umfassend eine siliciumorganische Verbindung, wobei die siliciumorganische Verbindung linear, verzweigt und/oder vernetzt ist und eine Viskosität bei 25 °C von 500 $mm^2/s$ bis 2.000.000 $mm^2/s$ (von 500 Centistokes bis 2.000.000 Centistokes), vorzugsweise von 1000 $mm^2/s$ bis 800.000 $mm^2/s$ (von 1000 Centistokes bis 800.000 Centistokes), mehr bevorzugt von 1000 $mm^2/s$ bis 300.000 $mm^2/s$ (von 1000 Centistokes bis 300.000 Centistokes) aufweist, wobei das Kernmaterial vorzugsweise, basierend auf dem Kerngesamtgewicht, von 0,1 % bis 99 %, mehr bevorzugt von 1 % bis 95 %, mehr bevorzugt von 1 % bis 80 %, am meisten bevorzugt von 5 % bis 50 % das schützende Suspensionsmittel umfasst;
(ii) einen festen, wasserlöslichen Wirkstoff, wobei das Kernmaterial vorzugsweise, basierend auf dem Kerngesamtgewicht, von 0,01 % bis 80 %, mehr bevorzugt von 0,1 % bis 50 %, mehr bevorzugt von 1 % bis 25 %, am meisten bevorzugt von 1 % bis 10 % den festen, wasserlöslichen Wirkstoff umfasst, wobei der feste, wasserlösliche Wirkstoff ein Material umfasst, das ausgewählt ist aus der Gruppe bestehend aus einem Metallkatalysator, einem Nichtmetallkatalysator, einem Aktivator, einer vorgeformten Peroxycarbonsäure, einem Diacylperoxid, einer Wasserstoffperoxidquelle, einem Enzym und Mischungen davon, und
(iii) ein optionales hydrophobes, organisches Material, vorzugsweise umfassend ein Material mit einem ClogP von 1,5 bis 10, mehr bevorzugt von 1,5 bis 6, mehr bevorzugt von 2 bis 5, am meisten bevorzugt von 2,2 bis 4,5, wobei das Kernmaterial vorzugsweise, basierend auf dem Kerngesamtgewicht, von 0,1 % bis 99 %, mehr bevorzugt von 1 % bis 95 %, mehr bevorzugt von 1 % bis 80 %, am meisten bevorzugt von 5 % bis 80 % das hydrophobe, organische Material umfasst; wobei das Umhüllungsmaterial das Kernmaterial einkapselt, wobei das Teilchen vorzugsweise, basierend auf dem Teilchengesamtgewicht, von 1 % bis 95 %, mehr bevorzugt von 1 % bis 95 %, mehr bevorzugt von 5 % bis 80 %, am meisten bevorzugt von 5 % bis 50 % das Kernmaterial umfasst, wobei das Endprodukt vorzugsweise, basierend auf dem Endproduktgesamtgewicht, von 0,01 % bis 80 %, bevorzugt von 0,1 % bis 50 %, mehr bevorzugt von 1 % bis 25 %, am meisten bevorzugt von 1 % bis 10 % das Teilchen umfasst und das Endprodukt vorzugsweise, basierend auf dem Endproduktgesamtgewicht, von 1 % bis 85 %, mehr bevorzugt von 3 % bis 60 %, mehr bevorzugt von 5 % bis 40 %, am meisten bevorzugt von 5 % bis 20 % Wasser insgesamt umfasst.

**2.** Endprodukt nach einem der vorstehenden Ansprüche, wobei:

a) der Metallkatalysator ein Material umfasst, das ausgewählt ist aus der Gruppe bestehend aus Dichlor-1,4-diethyl-1,4,8,11-tetraaazabicyclo[6.6.2]hexadecanmangan(II); Dichlor-1,4-dimethyl-1,4,8,11-tetraaazabicyclo[6.6.2]hexadecanmangan(II) und Mischungen davon;
b) der Nichtmetallkatalysator ein Material umfasst, das ausgewählt ist aus der Gruppe bestehend aus 2-[3-[(2-Hexyldodecyl)oxy]-2-(sulfooxy)propyl]-3,4-dihydroisochinolinium, inneres Salz; 3,4-Dihydro-2-[3-[(2-pentylundecyl)oxy]-2-(sulfooxy)propyl]isochinolinium, inneres Salz; 2-[3-[(2-Butyldecyl)oxy]-2-(sulfooxy)propyl]-3,4-dihydroisochinolinium, inneres Salz; 3,4-Dihydro-2-[3-(octadecyloxy)-2-(sulfooxy)propyl]isochinolinium, inneres Salz; 2-[3-(Hexadecyloxy)-2-(sulfooxy)propyl]-3,4-dihydroisochinolinium, inneres Salz; 3,4-Dihydro-2-[2-(sulfooxy)-3-(tetradecyloxy)propyl]isochinolinium, inneres Salz; 2-[3-(Dodecyloxy)-2-(sulfooxy)propyl]-3,4-dihydroisochinolinium, inneres Salz; 2-[3-[(3-Hexyldecyl)oxy]-2-(sulfooxy)propyl]-3,4-dihydroisochinolinium, inneres Salz; 3,4-Dihydro-2-[3-[(2-pentylnonyl)oxy]-2-(sulfooxy)propyl]isochinolinium, inneres Salz; 3,4-Dihydro-2-[3-[(2-propylheptyl)oxy]-2-(sulfooxy)propyl]isochinolinium, inneres Salz; 2-[3-[(2-Butyloctyl)oxy]-2-(sulfooxy)propyl]-3,4-dihydroisochinolinium, inneres Salz; 2-[3-(Decyloxy)-2-(sulfooxy)propyl]-3,4-dihydroisochinolinium, inneres Salz; 3,4-Dihydro-2-[3-(octyloxy)-2-(sulfaoxy)propyl]isochinolinium, inneres Salz; 2-[3-[(2-Ethylhexyl)oxy]-2-(sulfooxy)propyl]-3,4-dihydroisochinolinium, inneres Salz und Mischungen davon;
c) der Bleichaktivator ein Material umfasst, das ausgewählt ist aus der Gruppe bestehend aus Tetraacetylethylendiamin (TAED); Benzoylcaprolactam (BzCL); 4-Nitrobenzoylcaprolactam; 3-Chlorbenzoylcaprolactam; Benzoyloxybenzolsulfonat (BOBS); Nonanoyloxybenzolsulfonat (NOBS); Phenylbenzoat (PhBz); Decanoyloxybenzolsulfonat ($C_{10}$-OBS); Benzoylvalerolactam (BZVL); Octanoyloxybenzolsulfonat ($C_8$-OBS); perhydrolysierbaren Estern; 4-[N-(Nonaoyl)aminohexanoyloxy]-benzolsulfonatnatriumsalz (NACA-OBS); Dodecanoyloxybenzolsulfonat (LOBS oder $C_{12}$-OBS); 10-Undecenoyloxybenzolsulfonat (UDOBS oder $C_{11}$-OBS mit Ungesättigtheit an der Position 10); Decanoyloxybenzoesäure (DOBA); (6-Octanamidocaproyl)oxybenzolsulfonat; (6-Nonanamidocaproyl)oxybenzolsulfonat; (6-Decanamidocaproyl)oxybenzolsulfonat und Mischungen davon;
d) die vorgeformte Persäure ein Material umfasst, das ausgewählt ist aus der Gruppe bestehend aus Peroxymonoschwefelsäuren; Perimidsäuren; Peroxokohlensäuren; Percarbonsäuren und Salzen der Säuren; wobei die Percarbonsäuren und Salze davon unter einem Gesichtspunkt Phthalimidoperoxyhexansäure, 1,12-Diperoxydodecandisäure; oder Monoperoxyphthalsäure (Magnesiumsalzhexahydrat) sein können; Amidoperoxysäuren, wobei die Amidoperoxysäuren unter einem Gesichtspunkt N,N'-Terephthaloyl-di(6-aminocapronsäure), ein Mononylamid von entweder Peroxybernsteinsäure (NAPSA) oder Peroxyadipinsäure (NAPAA), N-Nonanoylaminoperoxycapronsäure (NAPCA) und Mischungen davon sein können;
e) das Diacylperoxid ein Material umfasst, das ausgewählt ist aus der Gruppe bestehend aus Dinonanoylperoxid, Didecanoylperoxid, Diundecanoylperoxid, Dilauroylperoxid, Dibenzoylperoxid, Di-(3,5,5-trimethylhexanoyl)peroxid und Mischungen davon;
f) die Wasserstoffperoxidquelle ein Material umfasst, das ausgewählt ist aus der Gruppe bestehend aus einem Perborat, einem Percarbonat einem Peroxyhydrat, einem Peroxid, einem Persulfat und Mischungen davon; und
g) das Enzym ein Material umfasst, das ausgewählt ist aus der Gruppe bestehend aus Peroxidasen, Proteasen, Lipasen, Phospholipasen, Cellobiohydrolasen, Cellobiosedehydrogenasen, Esterasen, Cutinasen, Pectinasen, Mannanasen, Pectatlyasen, Keratinasen, Reductasen, Oxidasen, Phenoloxidasen, Lipoxygenasen, Ligninasen, Pullulanasen, Tannasen, Pentosanasen, Glucanasen, Arabinosidasen, Hyaluronidase, Chondroitinase, Laccasen, Amylasen und Mischungen davon.

**3.** Endprodukt nach einem der vorstehenden Ansprüche, wobei die siliciumorganische Verbindung ein Material umfasst, das ausgewählt ist aus der Gruppe bestehend aus nicht funktionalisierten Siloxanpolymeren, funktionalisierten Siloxanpolymeren und Mischungen davon, wobei die funktionalisierten Siloxanpolymere vorzugsweise ein Aminosilicon umfassen.

**4.** Endprodukt nach einem der vorstehenden Ansprüche, wobei das hydrophobe, organische Material ein Material umfasst, das ausgewählt ist aus der Gruppe bestehend aus einem aliphatischen, hydrophoben, organischen Material; einem aromatischen, hydrophoben, organischen Material und Mischungen davon.

**5.** Endprodukt nach einem der vorstehenden Ansprüche, wobei das hydrophobe, organische Material ein Material umfasst, das ausgewählt ist aus der Gruppe bestehend aus einer Carbonsäure, einem Ester, einem Alkohol, einer Fettsäure, einem natürlichen Öl, einem synthetischen Öl, einem Aldehyd, einem Keton, einem Nitril, einem Kohlenwasserstoff, einem Ether, einem Acetal, einer Schiff-Base, einem Wachs und Mischungen davon.

**6.** Endprodukt nach Anspruch 5, wobei:

a) der Alkohol ein Material umfasst, das ausgewählt ist aus Laurylalkohol, Citronellol, alpha-Terpineol, 2-tert-Butylcyclohexanol, 2,6-Dimethyl-2-octanol, 3,7-Dimethyl-3-octanol und 2,6-Dimethyl-2-octanol, 2-Methyl-4-(2,2,3-trimethyl-3-cyclopentenyl)-2-buten-1-ol, Linalool, Tetrahydrolinalool und Mischungen davon;
b) der Ester ein Material umfasst, das ausgewählt ist aus Methyllaurat, Methyljasmonat, Hexylisovalerat, Geranylacetat, 1,4-Dioxacyclohexadecan-5,16-dion, 4-tert-Butylcyclohexylacetat, 3,5,5-Trimethylhexylacetat, Ethyl-2-methylpentanoat, Ethylmethyl-2-butyrat, Isopropylmyristat und Mischungen davon;
c) der Ether ein Material umfasst, das ausgewählt ist aus (3z)-1-[(2-Methyl-2-propenyl)oxy]-3-hexen, Decahydrospiro[furan-2(3h),5'-[4.7]methano[5h[inden], 4,9,12,12-Tetramethyl-5-oxatricyclo[8.2.0.0(4,6)]dodecan, Decahydro-2,6,6,7,8,8-hexamethyl-2h-indeno[4,5-b]furan, Isomeren von Decahydro-2,6,6,7,8,8-hexamethyl-2h-indeno[4,5-b]furan, 2-(1-Ethylpentyl)-1,3-dioxolan, 2-Methyl-1,5-dioxaspiro[5.5]undecan, Phenylethylcyclohexylether und Mischungen davon;
d) die Carboxylsäure ein Material umfasst, das ausgewählt ist aus Laurinsäure, Myristinsäure, 2,4-Dimethoxybenzoesäure, 2,4-Dimethyl-2-pentensäure, Geraniumsäure, Salicylsäure, Cyclohexylessigsäure und Mischungen davon;
e) das Nitril ein Material umfasst, das ausgewählt ist aus Laurylnitril, 2-Phenylhexannitril, Methyl 2-[{(4-(4-hydroxy-4-methylpentyl)-1-cyclohexenyl)methylen}amino}benzoat, 2,2,4-Trimethyl-4-phenyl-butannitril, 3,7-Dimethyloctannitril, (e)-3-Phenyl-2-propennitril, 3,7-Dimethyl-6-octennitril und Mischungen davon;

f) das Amin ein Material umfasst, das ausgewählt ist aus 4-(4,8-Dimethyl-3,7-nonadienyl)-pyridin, (2-Methylpropyl)-chinolin und Mischungen davon;
g) das Keton ein Material umfasst, das ausgewählt ist aus Dihydrojasmon, Methyl-beta-ionon, Methylheptenon, 6,10-Dimethylundecen-2-on, 1,3,4,6,7,8a-Hexahydro-1,1,5,5-tetramethyl-2h-2,4a-methanonaphthalen-8(5h)-on, 5-Cyclohexadecen-1-on, Ionon und Mischungen davon;
h) das Aldehyd ein Material umfasst, das ausgewählt ist aus Laurinaldehyd, Amylzimtaldehyd, 3,6(und 4,6)-Dimethylcyclohex-3-en-1-carboxaldehyd, 2,4-Dimethyl-3-cyclohexen-1-carboxaldehyd, 1-Methyl-4-(4-methyl-3-pentenyl)cyclohex-3-en-1-carboxaldehyd, 3-(und 4-)(4-Methyl-3-pentyl)cyclohex-3-en-1-carboxaldehyd, ((3,7,-Dimethyl-6-octenyl)oxy)acetaldehyd und Mischungen davon;
i) der Kohlenwasserstoff ein Material umfasst, das ausgewählt ist aus Isolongifolen, Limonen, Terpinolen, 3,7-Dimethyl-1,3,6-octatrien, Bisabolenalpha-pinen und Mischungen davon;
j) die Schiff-Base ein Material umfasst, das ausgewählt ist aus Methylanthranilat/Citronellal-Schiff-Base, Isononylaldehyd/methylanthranilat-Schiff-Base, Methyl-N-(3,7-dimethyl-7-hydroxyoctyliden)-anthranilat-Schiff-Base und Mischungen davon;
k) die Wachse ein Material umfassen, das ausgewählt ist aus der Gruppe bestehend aus Carnaubawachs, Bienenwachs, Paraffin, Petrolatum, Polytetrafluorethylenwachs und Mischungen davon;
l) die natürlichen und/oder synthetischen Öle ein Material umfassen, das ausgewählt ist aus der Gruppe bestehend aus Lavendelöl, Zedernholzöl, Pflanzenöl, bromiertem Öl, Eucalyptusöl, Ylang-Ylang-Öl, Patschuliöl, Bergamottenöl und Mischungen davon.

**7.** Endprodukt nach einem der vorstehenden Ansprüche mit einer Wirkstofffreisetzung von wenigstens 10 %, vorzugsweise wenigstens 25 %, mehr bevorzugt wenigstens 35 %, mehr bevorzugt von 50 % bis 100 %, mehr bevorzugt von 65 % bis 95 %, am meisten bevorzugt von 85 % bis 95 % des Wirkstoffs nach 10 Minuten, vorzugsweise 8 Minuten, mehr bevorzugt 5 Minuten, der Verwendung des Endprodukts, das die Teilchen enthält.

**8.** Endprodukt nach einem der vorstehenden Ansprüche, wobei wenigstens 75 %, vorzugsweise 85 %, mehr bevorzugt 90 % der Teilchen eine Teilchengröße von 1 Mikrometer bis 120 Mikrometer aufweisen.

**9.** Endprodukt nach einem der vorstehenden Ansprüche, wobei wenigstens 75 %, vorzugsweise 85 %, mehr bevorzugt 90 % der Teilchen eine Teilchenwanddicke von 30 nm bis 500 nm, vorzugsweise von 40 nm bis 250 nm, mehr bevorzugt von 50 nm bis 150 nm aufweisen.

**10.** Endprodukt nach einem der vorstehenden Ansprüche, wobei das Endprodukt ein Material umfasst, das ausgewählt ist aus der Gruppe bestehend aus einem Fänger, einem Strukturmittel, einem Anti-Agglomerisierungsmittel und Mischungen davon.

**11.** Verfahren zum Behandeln und/oder Reinigen einer Stelle, wobei das Verfahren Folgendes umfasst

a) wahlweise Waschen und/oder Spülen der Stelle;
b) das Inkontaktbringen der Stelle mit einem Endprodukt nach einem der vorstehenden Ansprüche; und
c) wahlweise Waschen und/oder Spülen der Stelle.

**12.** Verfahren zur Herstellung eines Endprodukts, das ein Endproduktzusatzmaterial und ein Teilchen umfasst, wobei das Verfahren Folgendes umfasst:

a) Herstellen eines Kernmaterials, umfassend einen festen, wasserlöslichen Wirkstoff, ein schützendes Suspensionsmittel mit einer Viskosität bei 25 °C von 500 $mm^2/s$ bis 2.000.000 $mm^2/s$ (von 500 Centistokes bis 2.000.000 Centistokes), vorzugsweise von 1000 $mm^2/s$ bis 800.000 $mm^2/s$ (von 1000 Centistokes bis 800.000 Centistokes), mehr bevorzugt von 1000 $mm^2/s$ bis 300.000 $mm^2/s$ (von 1000 Centistokes bis 300.000 Centistokes), wobei das schützende Suspensionsmittel vorzugsweise ein Siliconmaterial mit einer Viskosität von wenigstens 30.000 $mm^2/s$ (30.000 Centistokes), mehr bevorzugt von 30.000 $mm^2/s$ bis 60.000 $mm^2/s$ (von 30.000 Centistokes bis 60.000 Centistokes) umfasst; und ein optionales hydrophobes, organisches Material, und das Kühlen dieses Kernmaterials, vorzugsweise auf eine Temperatur von 0 °C bis 25 °C;
b) Herstellen einer ersten Lösung, umfassend, basierend auf dem Gesamtlösungsgewicht, von 0,1 % bis 5 % einen Emulgator, vorzugsweise Polyvinylalkohol, und Kühlen dieser ersten Lösung, vorzugsweise auf eine Temperatur von 0 °C bis 25 °C;
c) Herstellen einer zweiten Lösung, umfassend, basierend auf dem Gesamtlösungsgewicht, von 65 % bis 97 % Kernmaterial und ein oder mehrere hydrophobe Monomere, umfassend Diacylchloride, Diisocyanate und/oder

Bischlorformiate, und Kühlen dieser zweiten Lösung, vorzugsweise auf eine Temperatur von 0 °C bis 25 °C;
d) Herstellen einer dritten Lösung, umfassend, basierend auf dem Gesamtgewicht, von 10 % bis 90 % Wasser, und ein oder mehrere hydrophile Monomere, die Diamine, Triamine und/oder Diole umfassen, und Kühlen dieser dritten Lösung, vorzugsweise auf eine Temperatur von 0 °C bis 25 °C;
e) Bilden einer ersten Zusammensetzung bei einer Temperatur von 0 °C bis 25 °C, entweder durch Kombinieren der zweiten Lösung und der ersten Lösung und Emulgieren der ersten Zusammensetzung; oder durch Emulgieren der zweiten Lösung in der ersten Lösung über eine Mikrovorrichtung, wobei die Mikrovorrichtung vorzugsweise ausgewählt ist aus der Gruppe bestehend aus einer Querstrommembran und/oder einer Flussfokussierungstechnik;
f) Kombinieren der ersten Zusammensetzung und der dritten Lösung zur Bildung einer zweiten Zusammensetzung und wahlweise Kombinieren beliebiger Verarbeitungshilfsmittel und der zweiten Zusammensetzung;
g) Rühren der zweiten Zusammensetzung für wenigstens 15 Minuten bei einer Temperatur von 0 °C bis 25 °C und wahlweise Kombinieren beliebiger Verarbeitungshilfsmittel zu der zweiten Zusammensetzung;
h) wahlweise Kombinieren eines beliebigen Fängermaterials, Neutralisationsmittels, Strukturmittels, von Salzen und/oder eines Anti-Agglomerierungsmittels mit der zweiten Zusammensetzung während des Schritts g) oder danach,
j) wahlweise Sprühtrocknen oder Agglomerieren der zweiten Zusammensetzung; und
k) Kombinieren der zweiten Zusammensetzung mit einem oder mehreren Endproduktzusätzen.

**13.** Verfahren zur Herstellung eines Endprodukts, das ein Endproduktzusatzmaterial und ein Teilchen umfasst, wobei das Verfahren Folgendes umfasst:

a) Herstellen eines Kernmaterials, umfassend einen festen, wasserlöslichen Wirkstoff, ein schützendes Suspensionsmittel mit einer Viskosität bei 25 °C von 500 $mm^2/s$ bis 2.000.000 $mm^2/s$ (von 500 Centistokes bis 2.000.000 Centistokes), vorzugsweise von 1000 $mm^2/s$ bis 800.000 $mm^2/s$ (von 1000 Centistokes bis 800.000 Centistokes), mehr bevorzugt von 1000 $mm^2/s$ bis 300.000 $mm^2/s$ (von 1000 Centistokes bis 300.000 Centistokes), wobei das schützende Suspensionsmittel vorzugsweise ein Siliconmaterial mit einer Viskosität von wenigstens 30.000 $mm^2/s$ (30.000 Centistoke), mehr bevorzugt von 30.000 $mm^2/s$ bis 60.000 $mm^2/s$ (von 30.000 Centistokes bis 60.000 Centistokes) umfasst, und ein optionales hydrophobes, organisches Material und Kühlen dieses Kernmaterials, vorzugsweise auf eine Temperatur von 0 °C bis 4 °C;
b) Herstellen einer ersten Lösung, umfassend, basierend auf dem Gesamtlösungsgewicht, von 0,1 % bis 10 % eines Polymers mit einem Trübungspunkt zwischen 0 °C und 120 °C, mehr bevorzugt zwischen 20 °C und 60 °C, wobei das Polymer vorzugsweise ein Polyvinylalkoholderivat umfasst; woraufhin die erste Lösung gekühlt wird, vorzugsweise auf eine Temperatur von 0 °C bis 4 °C;
c) wahlweise das Absenken des Trübungspunkts des in der ersten Lösung enthaltenen Polymers, vorzugsweise durch Erhöhen der Ionenstärke der Lösung, vorzugsweise durch Zugeben von Salz zu der ersten Lösung;
d) Herstellen einer zweiten Lösung, umfassend, basierend auf dem Gesamtlösungsgewicht, von 50 % bis 70 % Wasser, von 5 % bis 20 % ein mit Wasser mischbares, organisches Lösungsmittel, vorzugsweise Methanol, von 0,1 % bis 1 % eine starke Säure, vorzugsweise Schwefelsäure, von 2 % bis 10 % eine schwache Säure, vorzugsweise Essigsäure, und von 15 % bis 25 % ein Vernetzungsmittel, vorzugsweise Gluteraldehyd;
e) Herstellen einer dritten Lösung, umfassend, basierend auf dem Gesamtgewicht der dritten Lösung, von 70 % bis 99 % Wasser und einen oder mehrere Elektrolyten, umfassend Natriumsulfat, Natriumphosphat, Natriumcitrat, Natriumcarbonat, Natriumacetat und Mischungen davon;
f) Bilden einer ersten Zusammensetzung bei einer Temperatur von 0 °C bis 25 °C, entweder durch Kombinieren des Kernmaterials mit der ersten Lösung und Emulgieren der ersten Zusammensetzung; oder durch Emulgieren des Kernmaterials in der ersten Lösung über eine Mikrovorrichtung, wobei die Mikrovorrichtung vorzugsweise ausgewählt ist aus der Gruppe bestehend aus einer Querstrommembran und/oder einer Flussfokussierungstechnik;
g) Zugeben der dritten Lösung zu der ersten Zusammensetzung zur Bildung einer zweiten Zusammensetzung und wahlweise Kombinieren beliebiger Verarbeitungshilfsmittel und der zweiten Zusammensetzung;
h) Erhöhen der Temperatur der zweiten Zusammensetzung mit einer Geschwindigkeit von 0,2 °C/min bis 5 °C/min;
i) Mischen der zweiten Zusammensetzung für wenigstens 15 Minuten bei einer Temperatur von 1 °C bis 10 °C über dem Trübungspunkt der zweiten Zusammensetzung;
j) Zugeben der zweiten Lösung zu der zweiten Zusammensetzung zur Bildung einer dritten Zusammensetzung und wahlweise Kombinieren beliebiger Verarbeitungshilfsmittel und der dritten Zusammensetzung;
k) wahlweise Kombinieren eines beliebigen Fängermaterials, Neutralisationsmittels, Strukturmittels, von Salzen und/oder eines Anti-Agglomerierungsmittels mit der dritten Zusammensetzung während des Schritts j) oder

danach;

l) wahlweise Sprühtrocknen oder Agglomerieren der dritten Zusammensetzung; und

m) Kombinieren der dritten Zusammensetzung mit einem oder mehreren Endproduktzusätzen.

## Revendications

**1.** Produit de consommation comprenant une particule, ladite particule comprenant :

a) un matériau d'enveloppe, ledit matériau d'enveloppe comprenant un matériau choisi parmi :

(i) un matériau comprenant de la polyvinylpyrrolidone ;

(ii) des polymères dérivés de monomères hydrophiles comprenant des diamines, des triamines, des diols et leurs mélanges ;

(iii) des polymères dérivés de monomères hydrophobes comprenant des chlorures, diisocyanates, bischloroformiates de diacyle et leurs mélanges ;

(iv) un matériau comprenant un dérivé d'alcool polyvinylique ;

(v) un matériau comprenant un dérivé d'acrylate ; et

(vii) un matériau comprenant un polymère cellulosique ; et

b) un matériau de noyau, ledit matériau de noyau comprenant :

(i) un agent de suspension protecteur comprenant une organosilicone, ladite organosilicone étant linéaire, ramifiée et/ou réticulée et possédant une viscosité à 25 °C allant de 500 $mm^2/s$ à 2 000 000 $mm^2/s$ (500 centistokes à 2 000 000 centistokes), de préférence de 1000 $mm^2/s$ à 800 000 $mm^2/s$ (1000 centistokes à 800 000 centistokes), plus préférablement de 1000 $mm^2/s$ à 300 000 $mm^2/s$ (1000 centistokes à 300 000 centistokes), ledit matériau de noyau comprenant de préférence, sur la base du poids total de noyau, de 0,1 % à 99 %, plus préférablement de 1 % à 95 %, plus préférablement de 1 % à 80 %, le plus préférablement de 5 % à 50 % dudit agent de suspension protecteur ;

(ii) un agent bénéfique hydrosoluble solide, ledit matériau de noyau comprenant de préférence, sur la base du poids total de noyau, de 0,01 % à 80 %, plus préférablement de 0,1 % à 50 %, plus préférablement de 1 % à 25 %, le plus préférablement de 1 % à 10 %, dans lequel ledit agent bénéfique hydrosoluble solide comprend un matériau choisi dans le groupe constitué d'un catalyseur métallique, un catalyseur non métallique, un activateur, un acide peroxycarboxylique préformé, un peroxyde de diacyle, une source de peroxyde d'hydrogène, une enzyme et leurs mélanges, et

(iii) un matériau organique hydrophobe facultatif comprenant de préférence un matériau possédant un ClogP allant de 1,5 à 10, plus préférablement de 1,5 à 6, plus préférablement de 2 à 5, le plus préférablement de 2,2 à 4,5, ledit matériau de noyau comprenant de préférence, sur la base du poids total de noyau, de 0,1 % à 99 %, plus préférablement de 1 % à 95 %, plus préférablement de 1 % à 80 %, le plus préférablement de 5 % à 80 % dudit matériau organique hydrophobe ; ledit matériau d'enveloppe encapsulant ledit matériau de noyau, ladite particule comprenant de préférence, sur la base du poids total de particule, de 1 % à 95 %, plus préférablement de 1 % à 95 %, plus préférablement de 5 % à 80 %, le plus préférablement de 5 % à 50 % dudit matériau de noyau, ledit produit de consommation comprenant de préférence, sur la base du poids total de produit de consommation, de 0,01 % à 80 %, plus préférablement de 0,1 % à 50 %, plus préférablement de 1 % à 25 %, le plus préférablement de 1 % à 10 % de ladite particule, et ledit produit de consommation comprenant de préférence, sur la base du poids total de produit de consommation, de 1 % à 85 %, plus préférablement de 3 % à 60 %, plus préférablement de 5 % à 40 %, le plus préférablement de 5 % à 20 % d'eau totale.

**2.** Produit de consommation selon la quelconque revendication précédente, dans lequel :

a) ledit catalyseur métallique comprend un matériau choisi dans le groupe constitué de dichloro-1,4-diéthyl-1,4,8,11-tétra-azabicyclo[6.6.2]hexadécane manganèse(II) ; dichloro-1,4-diméthyl-1,4,8,11-tétra-azabicyclo[6.6.2]hexadécane manganèse(II) et des mélanges de ceux-ci ;

b) ledit catalyseur non métallique comprend un matériau choisi dans le groupe constitué de 2-[3-[(2-hexyldodecyl)oxy]-2-(sulfooxy)propyl]-3,4-dihydro-isoquinolinium, sel interne ; 3,4-dihydro-2-[3-[(2-pentylundécyl)oxy]-2-(sulfoxy)propyl]isoquinolinium, sel interne ; 2-[3-[(2-butyldécyl)oxy]-2-(sulfoxy)propyl]-3,4-dihydro-isoquinolinium, sel interne ; 3,4-dihydro-2-[3-(octadécyloxy)-2-(sulfoxy)propyl]isoquinolinium, sel interne ; 2-[3-(hexadécyloxy)-2-(sulfoxy)propyl]-3,4-dihydro-isoquinolinium, sel interne ; 3,4-dihydro-2-[2-(sulfoxy)-3-(tétradécyloxy)propyl]isoquinolinium, sel interne ; 2-[3-(dodécyloxy)-2-(sulfoxy)propyl]-3,4-dihydro-isoquinolinium, sel interne ; 2-[3-[(3-hexyldécyl)oxy]-2-(sulfoxy)propyl]-3,4-dihydro-isoquinolinium, sel interne ; 3,4-dihydro-2-[3-[(2-pentylnonyl)oxy]-2-(sulfoxy)propyl]isoquinolinium, sel interne ; 3,4-dihydro-2-[3-[(2-propylheptyl)oxy]-2-(sulfoxy)propyl]isoquinolinium, sel interne ; 2-[3-[(2-butyloctyl)oxy]-2-(sulfoxy)propyl]-3,4-dihydro-isoquinolinium, sel interne ; 2-[3-(décyloxy)-2-(sulfoxy)propyl]-3,4-dihydro-isoquinolinium, sel interne ; 3,4-dihydro-2-[3-(octyloxy)-2-(sulfoxy)propyl]isoquinolinium, sel interne ; 2-[3-[(2-éthylhexyl)oxy]-2-(sulfoxy)propyl]-3,4-dihydro-isoquinolinium, sel interne, et des mélanges de ceux-ci ;

c) ledit activateur de blanchiment comprend un matériau choisi dans le groupe constitué de tétra-acétyl éthylène diamine (TAED) ; benzoyl-caprolactame (BzCL) ; 4-nitrobenzoyl-caprolactame ; 3-chlorobenzoylcaprolactame ; sulfonate de benzoyloxybenzène (BOBS) ; sulfonate de nonanoyloxybenzène (NOBS) ; benzoate de phényle (PhBz) ; sulfonate de décanoyloxybenzène (C10-OBS) ; benzoyl-valérolactame (BZVL) ; sulfonate d'octanoyloxybenzène (C8-OBS) ; esters perhydrolysables ; sel de sodium de sulfonate de 4-[N-(nonaoyl) amino hexanoyloxy]-benzène (NACA-OBS) ; sulfonate de dodécanoyloxybenzène (LOBS ou C12-OBS) ; sulfonate de 10-undécénoyloxybenzène (UDOBS ou C11-OBS avec insaturation en position 10) ; acide décanoyloxybenzoïque (DOBA) ; oxybenzènesulfonate de (6-octanamidocaproyle) ; oxybenzènesulfonate de (6-nonanamidocaproyle) ; oxybenzènesulfonate de (6-décanamidocaproyle) et des mélanges de ceux-ci ;

d) ledit peracide préformé comprend un matériau choisi dans le groupe constitué d'acides peroxymonosulfuriques ; acides perimidique ; acides percaboniques ; acides percarboxyliques et sels desdits acides ; selon un aspect, lesdits acides percarboxyliques et leurs sels peuvent être l'acide phtalimidoperoxyhexanoïque, l'acide 1,12-25 diperoxydécanedioïque ; ou l'acide monoperoxyphtalique (sel de magnésium hexahydraté) ; amidoperoxyacides, selon un aspect, lesdits amidoperoxyacides peuvent être le N,N'-téréphtaloyl-di(acide 6-aminocaproïque), un monononylamide soit d'acide peroxysuccinique (NAPSA) soit d'acide peroxyadipique (NAPAA), l'acide N-nonanoylaminoperoxycaproïque (NAPCA), et leurs mélanges ;

e) ledit peroxyde de diacyle comprend un matériau choisi dans le groupe constitué de peroxyde de dinonanoyle, peroxyde de didécanoyle, peroxyde de diundécanoyle, peroxyde de dilauroyle, peroxyde de dibenzoyle, peroxyde de di-(3,5,5-triméthyle hexanoyle) et leurs mélanges ;

f) ladite source de peroxyde d'hydrogène comprend un matériau choisi dans le groupe constitué d'un perborate, un percarbonate, un peroxyhydrate, un peroxyde, un persulfate et des mélanges de ceux-ci ; et

g) ladite enzyme comprend un matériau choisi dans le groupe constitué de peroxydases, protéases, lipases, phospholipases, cellobiohydrolases, cellobiose déshydrogénases, estérases, cutinases, pectinases, mannanases, pectate lyases, kératinases, réductases, oxydases, phénoloxydases, lipoxygénases, ligninases, pullulanases, tannases, pentosanases, glucanases, arabinosidases, hyaluronidase, chondroïtinase, laccases, amylases, et leurs mélanges.

**3.** Produit de consommation selon l'une quelconque des revendications précédentes, dans lequel ladite organosilicone comprend un matériau choisi dans le groupe constitué de polymères siloxane non fonctionnalisés, polymères siloxane fonctionnalisés et leurs mélanges, lesdits polymères siloxane fonctionnalisés comprenant de préférence une aminosilicone.

**4.** Produit de consommation selon l'une quelconque des revendications précédentes, dans lequel ledit matériau organique hydrophobe comprend un matériau choisi dans le groupe constitué d'un matériau organique hydrophobe aliphatique ; un matériau organique hydrophobe aromatique et leurs mélanges.

**5.** Produit de consommation selon l'une quelconque des revendications précédentes, dans lequel ledit matériau organique hydrophobe comprend un matériau choisi dans le groupe constitué d'un acide carboxylique, un ester, un alcool, un acide gras, une huile naturelle, une huile de synthèse, un aldéhyde, une cétone, un nitrile, un hydrocarbure, un éther, un acétal, une base de Schiff, une cire et leurs mélanges.

**6.** Produit de consommation selon la revendication 5, dans lequel ;

a) ledit alcool comprend un matériau choisi parmi l'alcool laurylique, le citronellol, l'alpha-terpinéol, le 2-tert-butylcyclohexanol, le 2,6-diméthyl-2-octanol, le 3,7-diméthyl-3-octanol et le 2,6-diméthyl-2-octanol, le 2-méthyl-4-(2,2,3-triméthyle-3-cyclopentényl)-2-butén-1-ol, le linalol, le tétrahydrolinalol et leurs mélanges ;

b) ledit ester comprend un matériau choisi parmi le laurate de méthyle, le jasmonate de méthyle, l'isovalérate d'hexyle, l'acétate de géranyle, la 1,4-dioxacyclohexadécane-5,16-dione, l'acétate de 4-tert-butylcyclohexyle, l'acétate de 3,5,5-triméthylhexyle, l'éthyl-2-méthylpentanoate, le méthyl-2-butyrate d'éthyle, le myristate d'isopropyle et leurs mélanges ;

c) ledit éther comprend un matériau choisi parmi le (3z)-1-[(2-méthyl-2-propenyl)oxy]-3-hexène, le décahydrospiro[furan-2(3h),5'-[4.7]méthano[5h[indène], le 4,9,12,12-tétraméthyl-5-oxatricyclo[8.2.0.0(4,6)]dodécane, le décahydro-2,6,6,7,8,8-hexaméthyl-2h-indéno[4,5-b]furane, des isomères de décahydro-2,6,6,7,8,8-hexaméthyl-2h-indéno[4,5-b]furane, le 2-(1-éthylpentyl)-1,3-dioxolane, le 2-méthyl-1,5-dioxaspiro[5.5]undécane, l'éther cyclohexylique de phényléthyle et leurs mélanges ;

d) ledit acide carboxylique comprend un matériau choisi parmi l'acide laurique, l'acide myristique, l'acide 2,4-diméthoxybenzoïque, l'acide 2,4-diméthyl-2-penténoïque, l'acide géranique, l'acide salicylique, l'acide cyclohexylacétique et leurs mélanges ;

e) ledit nitrile comprend un matériau choisi parmi le lauryl-nitrile, le 2-phényl-hexanenitrile, le méthyl 2-[{(4-(4-hydroxy-4-méthylpentyl)-1-cyclohexényl)méthylène}amino}benzoate, le 2,2,4-triméthyl-4-phényl-butanenitrile, 3,7-diméthyloctanenitrile, le (e)-3-phényl-2-propènenitrile, le 3,7-diméthyl-6-octènenitrile et leurs mélanges ;

f) ladite amine comprend un matériau choisi parmi la 4-(4,8-diméthyl-3,7-nonadiényl) pyridine, la (2-méthylpropyl)-quinoléine et des mélanges de ceux-ci ;

g) ladite cétone comprend un matériau choisi parmi la dihydrojasmone, la méthyl-bêta-ionone, la méthyl-hepténone, la 6,10-diméthylundécén-2-one, la 1,3,4,6,7,8a-hexahydro-1,1,5,5-tétraméthyl-2h-2,4a-méthanonaphtalén-8(5h)-one, la 5-cyclohexadécén-1-one, l'ionone et leurs mélanges ;

h) ledit aldéhyde comprend un matériau choisi parmi l'aldéhyde laurique, l'aldéhyde amyl-cinnamique, le 3,6(et 4,6)-diméthylcyclohex-3-ène-1-carboxaldéhyde, le 2,4-diméthyl-3-cyclohexène-1-carboxaldéhyde, le 1-méthyl-4-(4-méthyl-3-pentényl)cyclohex-3-ène-1-carboxaldéhyde, le 3-(et 4-)(4-méthyl-3-pentyl)cyclohex-3-ène-1-carboxaldéhyde, le ((3,7,-diméthyl-6-octenyl)oxy)acétaldéhyde et leurs mélanges ;

i) ledit hydrocarbure comprend un matériau choisi parmi l'isolongifolène, le limonène, le terpinolène, le 3,7-diméthyl-1,3,6-octatriène, le bisabolène alpha-pinène et leurs mélanges ;

j) ladite base de Schiff comprend un matériau choisi parmi la base de Schiff anthranilate de méthyle/citronellal, la base de Schiff isononylaldéhyde/anthranilate de méthyle, la base de Schiff méthyl N-(3,7-diméthyl-7-hydroxyoctylidene)-anthranilate et leurs mélanges ;

k) lesdites cires comprennent un matériau choisi dans le groupe constitué de cire de carnauba, cire d'abeille, paraffine, vaseline, cire de polytétrafluoroéthylène, et leurs mélanges ;

l) lesdites huiles naturelles et/ou de synthèse comprennent un matériau choisi dans le groupe constitué d'huile de lavande, huile de bois de cèdre, huile végétale, huile bromée, huile d'eucalyptol, huile d'Ylang Ylang, huile de patchouli, essence de bergamote et leurs mélanges.

**7.** Produit de consommation selon l'une quelconque des revendications précédentes présentant une libération d'agent bénéfique d'au moins 10 %, de préférence au moins 25 %, plus préférablement au moins 35 %, plus préférablement de 50 % à 100 %, plus préférablement de 65 % à 95 %, le plus préférablement de 85 % à 95 % dudit agent bénéfique après 10 minutes, de préférence 8 minutes, plus préférablement 5 minutes d'utilisation d'un tel produit de consommation contenant lesdites particules.

**8.** Produit de consommation selon l'une quelconque des revendications précédentes, dans lequel au moins 75 %, de préférence 85 %, plus préférablement 90 %, desdites particules ont une taille de particules allant de 1 micromètre à 120 micromètres.

**9.** Produit de consommation selon l'une quelconque des revendications précédentes, dans lequel au moins 75 %, de préférence 85 %, plus préférablement 90 %, desdites particules ont une épaisseur de paroi de particule allant de 30 nm à 500 nm, de préférence de 40 nm à 250 nm, plus préférablement de 50 nm à 150 nm.

**10.** Produit de consommation selon l'une quelconque des revendications précédentes, ledit produit de consommation comprenant un matériau choisi dans le groupe constitué d'un piégeur, un structurant, un agent anti-agglomération et leurs mélanges.

**11.** Procédé de traitement et/ou de nettoyage d'un site, ledit procédé comprenant

a) le lavage et/ou le rinçage facultatifs dudit site ;

b) la mise en contact dudit site avec un produit de consommation selon l'une quelconque des revendications précédentes ; et

c) le lavage et/ou le rinçage facultatifs dudit site.

**12.** Processus de fabrication d'un produit de consommation comprenant un matériau additif de produit de consommation

et une particule, ledit processus comprenant :

a) la préparation d'un matériau de noyau comprenant un agent bénéfique hydrosoluble solide, un agent de suspension protecteur possédant une viscosité à 25 °C allant de 500 $mm^2/s$ à 2 000 000 $mm^2/s$ (500 centistokes à 2 000 000 centistokes), de préférence de 1000 $mm^2/s$ à 800 000 $mm^2/s$ (1000 centistokes à 800 000 centistokes), plus préférablement de 1000 $mm^2/s$ à 300 000 $mm^2/s$ (1000 centistokes à 300 000 centistokes), de préférence ledit agent de suspension protecteur comprend un matériau siliconé ayant une viscosité d'au moins 30 000 $mm^2/s$ (30 000 centistokes), plus préférablement de 30 000 $mm^2/s$ à 60 000 $mm^2/s$ (30 000 centistokes à 60 000 centistokes) ; et un matériau organique hydrophobe facultatif et le refroidissement de ce matériau de noyau, de préférence à une température allant de 0 °C à 25 °C ;
b) la préparation d'une première solution comprenant, sur la base du poids total de solution, de 0,1 % à 5 % d'un émulsifiant, de préférence un alcool polyvinylique, et le refroidissement de cette première solution, de préférence à une température allant de 0 °C à 25 °C ;
c) la préparation d'une deuxième solution comprenant, sur la base du poids total de solution, de 65 % à 97 % de matériau de noyau, et un ou plusieurs monomères hydrophobes comprenant des chlorures, diisocyanates et/ou bischloroformiates de diacyle, et le refroidissement de cette deuxième solution, de préférence à une température allant de 0 °C à 25 °C ; 30
d) la préparation d'une troisième solution comprenant, sur la base du poids total, de 10 % à 90 % d'eau, et un ou plusieurs monomères hydrophiles comprenant des diamines, triamines et/ou diols, et le refroidissement de cette troisième solution, de préférence à une température allant de 0 °C à 25 °C ;
e) la formation d'une première composition à une température allant de 0 °C à 25 °C, soit en combinant ladite seconde solution et ladite première solution et en émulsifiant ladite première composition ; ou en émulsifiant ladite deuxième solution dans ladite première solution via un microdispositif, de préférence ledit microdispositif est choisi dans le groupe constitué d'une membrane à flux croisés et/ou d'une technologie de focalisation de flux ;
f) la combinaison de ladite première composition et de ladite troisième solution pour former une deuxième composition et la combinaison facultative de n'importe quels auxiliaires de traitement et de ladite deuxième composition ;
g) l'agitation de ladite deuxième composition pendant au moins 15 minutes à une température allant de 0 °C à 25 °C et la combinaison facultative de n'importe quels auxiliaires de traitement avec ladite deuxième composition ;
h) la combinaison facultative de n'importe quel(s) matériau piégeur, agent neutralisant, structurant, sels et/ou agent anti-agglomération avec ladite deuxième composition pendant l'étape g) ou par la suite,
j) le séchage par atomisation ou l'agglomération éventuel(le) de ladite deuxième composition ; et
k) la combinaison de ladite deuxième composition avec un ou plusieurs additifs de produit de consommation.

**13.** Processus de fabrication d'un produit de consommation comprenant un matériau additif de produit de consommation et une particule, ledit processus comprenant :

a) la préparation d'un matériau de noyau comprenant un agent bénéfique hydrosoluble solide, un agent de suspension protecteur possédant une viscosité à 25 °C allant de 500 $mm^2/s$ à 2 000 000 $mm^2/s$ (500 centistokes à 2 000 000 centistokes), de préférence de 1000 $mm^2/s$ à 800 000 $mm^2/s$ (1000 centistokes à 800 000 centistokes), plus préférablement de 1000 $mm^2/s$ à 300 000 $mm^2/s$ (1000 centistokes à 300 000 centistokes), de préférence ledit agent de suspension protecteur comprend un matériau siliconé ayant une viscosité d'au moins 30 000 $mm^2/s$ (30 000 centistokes), plus préférablement de 30 000 $mm^2/s$ à 60 000 $mm^2/s$ (30 000 centistokes à 60 000 centistokes) et un matériau organique hydrophobe facultatif et le refroidissement de ce matériau de noyau, de préférence à une température allant de 0 °C à 4 °C ;
b) la préparation d'une première solution comprenant, sur la base du poids total de solution, de 0,1 % à 10 % d'un polymère présentant un point de trouble entre 0 °C et 120 °C, plus préférablement entre 20 °C et 60 °C, de préférence ledit polymère comprend un dérivé d'alcool polyvinylique ; puis ladite première solution est refroidie, de préférence à une température allant de 0 °C à 4 °C ;
c) l'abaissement facultatif du point de trouble du polymère contenu dans ladite première solution, de préférence en augmentant la force ionique de ladite solution, de préférence en ajoutant un sel à ladite première solution ;
d) la préparation d'une deuxième solution comprenant, sur la base du poids total de solution, de 50 % à 70 % d'eau, de 5 à 20 % d'un solvant organique miscible dans l'eau, de préférence du méthanol, de 0,1 % à 1 % d'un acide fort, de préférence de l'acide sulfurique, de 2 % à 10 % d'un acide faible, de préférence de l'acide acétique, et de 15 % à 25 % d'un agent de réticulation, de préférence du glutaraldéhyde ;
e) la préparation d'une troisième solution comprenant, sur la base du poids total de la troisième solution, de 70 % à 99 % d'eau, et un ou plusieurs électrolytes comprenant du sulfate de sodium, du phosphate de sodium,

du citrate de sodium, du carbonate de sodium, de l'acétate de sodium et leurs mélanges ;
f) la formation d'une première composition à une température allant de 0 °C à 25 °C, soit en combinant ledit matériau de noyau et ladite première solution et en émulsifiant ladite première composition ; soit en émulsifiant ledit matériau de noyau dans ladite première solution via un microdispositif, de préférence ledit microdispositif est choisi dans le groupe constitué d'une membrane à flux croisés et/ou d'une technologie de focalisation de flux ;
g) l'ajout de ladite troisième solution à ladite première composition pour former une deuxième composition et la combinaison facultative de n'importe quels auxiliaires de traitement et de ladite deuxième composition ;
h) l'augmentation de la température de ladite deuxième composition à une vitesse allant de 0,2 °C/min à 5 °C/min ;
i) le mélange de ladite deuxième composition pendant au moins 15 minutes à une température allant de 1 °C à 10 °C au-dessus du point de trouble de ladite deuxième composition ;
j) l'ajout de ladite deuxième solution à ladite deuxième composition pour former une troisième composition et la combinaison facultative de n'importe quels auxiliaires de traitement et de ladite troisième composition ;
k) la combinaison facultative de n'importe quel(s) matériau piégeur, agent neutralisant, structurant, sels et/ou agent anti-agglomération avec ladite troisième composition pendant l'étape j) ou par la suite ;
l) le séchage par atomisation ou l'agglomération éventuel(le) de ladite troisième composition ; et
m) la combinaison de ladite troisième composition avec un ou plusieurs additifs de produit de consommation.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20050098759 A1
- US 4818421 A
- US 3299112 A
- US 7335630 B2
- US 4911852 A
- US 20050170994 A1
- US 61170150 B
- US 20070275866 A1
- US 5576282 A
- US 6306812 B1
- US 6326348 B1
- US 4430243 A
- US 5597936 A
- US 5595967 A
- US 6225464 B


### Non-patent literature cited in the description


- *J. Microencapsulation,* 2001, vol. 18 (5), 593-602
- **ZHANG, Z. ; SUN, G.** Mechanical Properties of Melamine-Formaldehyde microcapsules. *J. Microencapsulation,* 2001, vol. 18 (5), 593-602
- **A. LEO.** Comprehensive Medicinal Chemistry. Pergamon Press, 1990, vol. 4, 295
- *JAOCS,* January 1989, vol. 66 (1